# EUROPEAN PATENT APPLICATION

(11) **EP 1 188 797 A2**
(43) Date of publication of application: **20.03.2002**
(21) Application number: 01307516.3
(22) Date of filing: 04.09.2001
(51) Int. Cl.: C09B 23/01, B41C 1/10, C09B 23/00

(54) **Polymethine compound, a process for its production, and use of the compound**

(30) Priority: 13.09.2000 JP 2000278102
(71) Applicant: Yamamoto Chemicals, Inc., Yao-shi, Osaka 581-0034 (JP)
(72) Inventor: Sasaki, Nobuaki, Souraku-gun, Kyoto 619-1127 (JP); Wada, Sayuri, Fujiidera-shi, Osaka 583-0023 (JP); Fujita, Shigeo, Kawachinagano-shi, Osaka 586-0077 (JP); Iwasaki, Yasuhisa, Ikoma-gun, Nara 636-0804 (JP)
(74) Representative: Perry, Robert Edward

(57) **Abstract**

The invention provides a near-infrared absorbing material showing a high sensitivity to a YAG laser having an emission wavelength of 900∼1100 nm as well as a high photothermal conversion efficiency, an original plate for direct printing plate making which utilizes the near-infrared absorbing material, and a novel polymethine compound represented by the following general formula (1), of which the above near-infrared absorbing material is comprised. 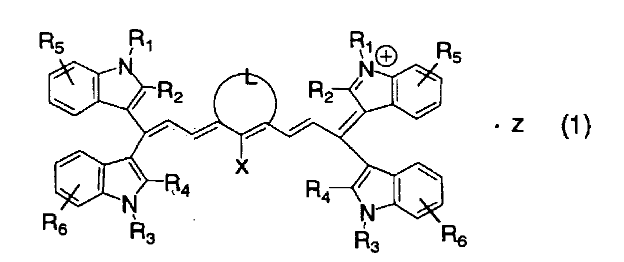 (wherein R₁ and R₃ each independently represents an unsubstituted or substituted alkyl group, a cycloalkyl group of 5~7 carbon atoms or an unsubstituted or substituted aryl group; R₂ and R₄ each independently represents an unsubstituted or substituted alkyl group or an unsubstituted or substituted aryl group; R₅ and R₆ each independently represents a hydrogen atom, an unsubstituted or substituted alkyl group or an unsubstituted or substituted alkoxy group; L represents an unsubstituted or substituted alkylene group of 2∼4 carbon atoms which is necessary for formation of a cyclic structure; X represents a hydrogen atom, a halogen atom or a substituted amino group; Z represents a charge-neutralizing ion)

## Description

### FIELD OF THE INVENTION

The present invention relates to a novel polymethine compound, a process for producing said compound, and a near-infrared absorbing material containing said compound. The polymethine compound of the invention absorbs in the near-infrared region of 900∼1100 nm and can be used not only as a near-infrared absorbing material for laser light-exploiting image recording, e.g. a near-infrared absorbing material for printing platemaking utilizing a laser beam or a laser thermal recording material, but also as a spectral sensitizing dye for electron photography or silver halide photography, a dye for optical disk use and a dye for the near-infrared red absorption filter for plasma display or the like use, among other applications.

### PRIOR ART

With the recent advances in laser technology, image recording systems utilizing laser light for high-speed, high-density, high quality recording, for example image recording systems involving conversion of laser light to heat, such as laser thermal recording materials and laser thermographic copying materials, are under investigation. Furthermore, with the rapid development of electronics associated with the spread of computers and innovations in the field of digital image processing technology by way of background, the development of the so-called computer-to-plate technology (CTP platemaking technology), namely the technology of producing original plates for printing directly from digital data, is underway with a great enthusiasm.

In an image recording system involving conversion of laser light to heat (laser thermal recording system), a light absorber aligned with the laser wavelength is used to form a image. However, unless the laser output is increased to a fairly high level, the thermal energy required for image formation cannot be obtained and, therefore, the advent of a light absorber with a good photothermal conversion efficiency is being demanded.

With such a laser thermal recording material, a semiconductor laser having an emission band in the near-infrared region of 750∼850 nm or a YAG laser having an emission band in the near-infrared region of 900∼1100 nm is generally employed.

In the field of original plate for direct printing plate making platemaking technology, as classified by the platemaking technique, the laser light irradiation method, the thermal head writing method, the local voltage application method using pin electrodes, and the ink-jet method in which an ink-repellent or ink-layer is formed with ink jets, among others, are known. The laser light method, in particular, is superior to any other methods in resolution and platemaking speed and, in this area, various image-forming systems are being explored.

Regarding the CTP platemaking technology utilizing laser light, the photosensitive type and the thermosensitive type are available. As the photosensitive type plate material, an electron photographic system utilizing an organic photoconducter (OPC) and a silver salt system utilizing a salt of silver, among others, are known but these plate materials require large-size and expensive production equipment and the price of the plate is higher than the price of the presensitized plate (PS plate). Moreover, there also is the problem associated with disposal of the developer solution.

The thermosensitive type plate material has the disadvantage of low sensitivity as compared with the photosensitive type plate material but since it can be handled in the ordinary room (lit room), a semiconductor laser with an emission wavelength of 750∼850 nm and a YAG laser with an emission band of 900∼1100 nm are energetically evaluated as exposure light sources for platemaking.

The thermosentive type plate material requires a photothermal conversion layer for the conversion of light to heat. This photothermal conversion layer contains a light-to-heat converting agent, such as a near-infrared absorbing material. This light-to-heat converting agent must absorb the laser light to be used and, for improved sensitivity, the relevant laser light absorbing capacity and photothermal conversion efficiency must be as high as possible.

The light-to-heat converting agent includes pigment type and dye type substances. As the pigment type substance, carbon black is generally used but compared with dye type substances its absorption is broad and low in the absorption capacity for a given laser emission so that it must be used in a large amount. Moreover, a highly sophisticated dispersion technology is required for kneading it with the image-forming component, resin binder and other materials.

The dye type substance can be selected from among substances having high absorbing capacities for the laser light to be used, good compatibility with the image-forming component, resin binder and other components, and good solubility in the solvent to be used.

Referring to the thermosensitive plate material, materials suitable for high-speed printing plates are under investigation and particularly dye type compounds compatible with high-output YAG lasers are in demand. As dye type compounds, organic compounds absorbing in the wavelength range of 900∼1100 nm, such as phthalocyanine compounds, naphthalocyanine compounds, dithiolene metal complex compounds, aminium compounds and immonium compounds, are known. However, these compounds have several drawbacks such as low absorption coefficient, visible band absorption and low solvent solubility.

Partly because of their high absorption coefficients at absorption maxima, polymethine compounds are utilized in a broad range of fields such as photosensitive dyes for silver salt photography, photosensitive dyes for electron photography, dyes for laser recording, dyes for laser oscillation and so forth. However, few compounds are known to match YAG lasers.

At the practical level, the industry knows few YAG laser-matched organic compounds absorbing in the 900∼1100 nm region of the spectrum. Meanwhile, in the electronic equipment industry, plasma display (hereinafter referred to briefly as PDP) was developed and has by now been implemented as a main stream of large-screen flat display. PDP involves release of an electromagnetic radiation on plasma light emission and, hence, may cause erratic actions in the remote control of other household electrical appliances owing to the electromagnetic radiation (near-infrared rays). For the prevention of such erratic actions of other appliances, it was contemplated to block near-infrared light (750∼1200 nm) with a near-infrared absorption filter in the display and the concept has already been implemented. Usually, for this purpose, a resin film containing a color having a high absorption in the wavelength region of 750∼1200 nm with only a little absorption of visible light has been employed and, therefore, a color with good durability, high absorption coefficient and good compatibility with the resin used is being wanted.

As to said polymethine compound, a large number of specific compounds are already known and there also are known compounds having a cyclic structure introduced as part of the methine chain for increased durability. For example, as compounds having substituent groups which are partly similar to those of the compound of the invention (Compound A), a heptamethine compound having bis-indolyl groups on both sides is disclosed in Example 60 on page 65 of JP Kokai H1-153753.

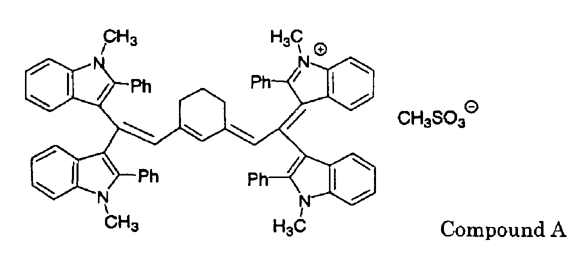

This compound, however, is distinct from the compound described in instant application in that the former has a shorter methine chain and has an absorption maximum at 796 nm. Therefore, it absorbs little light of a high-output YAG laser having a stable emission band at 1064 nm which is currently under investigation. Thus, the compound is too low in sensitivity and cannot be used as a near-infrared absorbing material exploiting said laser as a light source.

### OBJECT AND SUMMARY OF THE INVENTION

The object of the present invention is to provide a polymethine compound suitable as a near-infrared absorbing material which absorbs little in the visible region of the spectrum, has a large absorption capacity in the oscillation band of a YAG laser which is a stable source of high-output laser light, as well as high solvent solubility and high light stability, and as such can be used with advantage in the photothermal conversion layer of laser thermal recording materials and original plates for direct printing plate making.

As the result of intensive investigations made for accomplishing the above object, the inventors of the present invention discovered that a novel polymethine compound absorbs little in the visible region of the spectrum, has good sensitivity to a YAG laser having an oscillation band of 900∼1100 nm as well as high photothermal conversion efficiency, and can be used as a near-infrared absorbing material which can be easily processed for various end uses, and have accordingly developed the present invention.

The present invention in its first aspect relates to a polymethine compound of the following general formula (1) 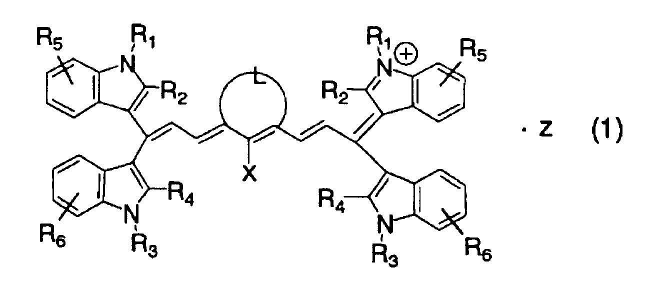 (wherein R₁ and R₃ each independently represents an unsubstituted or substituted alkyl group, a cycloalkyl group of 5∼7 carbon atoms or an unsubstituted or substituted aryl group; R₂ and R₄ each independently represents an unsubstituted or substituted alkyl group or an unsubstituted or substituted aryl group; R₅ and R₆ each independently represents a hydrogen atom, an unsubstituted or substituted alkyl group or an unsubstituted or substituted alkoxy group; L represents an unsubstituted or substituted alkylene group of 2∼4 carbon atoms which is necessary for formation of a cyclic structure; X represents a hydrogen atom, a halogen atom or a substituted amino group; Z represents a charge-neutralizing ion)

The present invention in its second aspect relates to a process for producing a polymethine compound of Claim 1 which comprises condensing an indolylethylene compound of the following general formula (2) with a diformyl compound of the following general formula (3) or a dianil compound of the following general formula (4) in the presence of an alkali metal salt by means of a dehydrative organic acid. 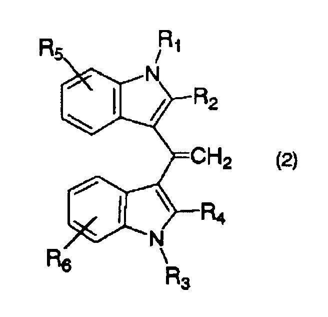 (wherein R₁ and R₃ each independently represents an unsubstituted or substituted alkyl group, a cycloalkyl group of 5∼7 carbon atoms, or an unsubstituted or substituted aryl group; R₂ and R₄ each independently represents an unsubstituted or substituted alkyl group or an unsubstituted or substituted aryl group; R₅ and R₆ each independently represents a hydrogen atom, an unsubstituted or substituted alkyl group, or an unsubstituted or substituted alkoxy group) 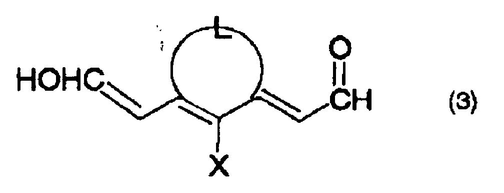 (wherein X represents a hydrogen atom, a halogen atom or a substituted amino group; L represents an unsubstituted or substituted alkylene group of 2∼4 carbon atoms which is necessary to form a cyclic structure) 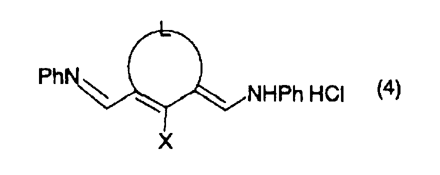 (wherein X and L have the same meanings as above)

The present invention in its third aspect relates to a near-infrared absorbing material comprising the polymethine compound according to said first aspect of the invention.

The present invention in its fourth aspect relates to an original plate for direct printing plate making comprising a support and a photothermal conversion layer disposed thereon, said photothermal conversion layer containing the polymethine compound according to said first aspect of the invention.

The present invention in its fifth aspect relates to a method of fabricating a printing plate which comprises irradiating the original plate for direct printing plate making according to said fourth aspect of the invention using a YAG laser having an emission band of 900∼1100 nm as a light source.

### BRIEF DESCRIPTION OF THE DRAWINGS

Fig. 1 is an IR absorption spectrum of the polymethine compound according to Example 1;
Fig. 2 is an IR absorption spectrum of the polymethine compound according to Example 2;
Fig. 3 is an IR absorption spectrum of the polymethine compound according to Example 3;
Fig. 4 is an IR absorption spectrum of the polymethine compound according to Example 4;
Fig. 5 is an IR absorption spectrum of the polymethine compound according to Example 5;
Fig. 6 is an IR absorption spectrum of the polymethine compound according to Example 6;
Fig. 7 is an IR absorption spectrum of the polymethine compound according to Example 7;
Fig. 8 is a VIS-NIR absorption spectrum of the polymethine compound according to Example 1 in diacetone alcohol;
Fig. 9 is a VIS-NIR absorption spectrum of the polymethine compound according to Example 2 in diacetone alcohol; and
Fig. 10 is a VIS-NIR absorption spectrum of the polymethine compound according to Example 3 in diacetone alcohol.

### DETAILED DESCRIPTION OF THE PREFERRED EMBODIMENTS OF THE INVENTION

The present invention is now described in detail.

### [Polymethine compound]

To begin with, the polymethine compound of the following general formula (1), which constitutes the first aspect of the invention, is described below. 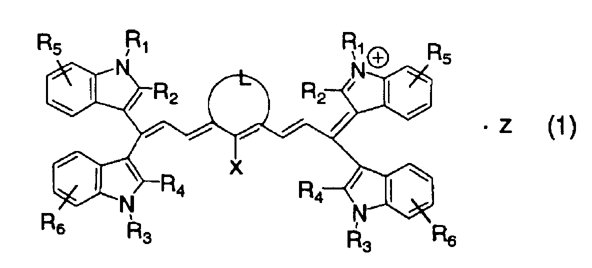 (wherein R₁ and R₃ each independently represents an unsubstituted or substituted alkyl group, a cycloalkyl group of 5∼7 carbon atoms or an unsubstituted or substituted aryl group; R₂ and R₄ each independently represents an unsubstituted or substituted alkyl group or an unsubstituted or substituted aryl group; R₅ and R₆ each independently represents a hydrogen atom, an unsubstituted or substituted alkyl group or an unsubstituted or substituted alkoxy group; L represents an unsubstituted or substituted alkylene group of 2∼4 carbon atoms which is necessary for formation of a cyclic structure; X represents a hydrogen atom, a halogen atom or a substituted amino group; Z represents a charge-neutralizing ion)

The unsubstituted alkyl groups for R₁ and R₃ are preferably straight-chain or branched-chain alkyl groups containing 1∼18 carbon atoms, more preferably straight-chain or branched-chain alkyl groups of 1∼8 carbon atoms. As specific examples, there can be mentioned methyl, ethyl, n-propyl, isopropyl, n-butyl, isobutyl, sec-butyl, n-pentyl, isopentyl, neopentyl, n-hexyl, isohexyl, sec-hexyl, 2-ethylbutyl, n-heptyl, isoheptyl, sec-heptyl, n-octyl, 2-ethylhexyl, n-decyl, n-dodecyl, n-pentadecyl and n-octadecyl.

The substituted alkyl groups for R₁ and R₃ are preferably alkoxyalkyl, sulfoalkyl and carboxyalkyl, and, among various alkoxyalkyl groups, those containing a total number of carbon atoms from 2 to 8 are particularly preferred. As specific examples, there can be mentioned 2-methoxyethyl, 3-methoxypropyl, 4-methoxybutyl, 2-ethoxyethyl, 3-ethoxypropyl, 4-ethoxybutyl, 2-n-propoxyethyl, 2-iso-propoxyethyl, 3-n-propoxypropyl, 4-n-propoxybutyl, 2-(2-methoxyethyl)ethyl and 2-(2-ethoxyethoxy)ethyl.

The preferred sulfoalkyl for R₁ and R₃ includes straight-chain or branched-chain sulfoalkyl groups containing 1∼18 carbon atoms, with straight-chain or branched-chain sulfoalkyl groups containing 1∼8 carbon atoms being particularly preferred. It is also preferable that at least one of the sulfoalkyl groups for R₁ and R₃ be in the form of a salt with an alkali metal ion or an alkylammonium ion. As specific examples, there can be mentioned 2-sulfoethyl, 3-sulfopropyl, 3-sulfobutyl, 4-sulfobutyl, 4-sulfo-3-methylbutyl, 2-(3-sulfopropoxy)ethyl, 2-hydroxy-3-sulfopropyl, 3-sulfo-2-(2-ethoxy)ethoxypropoxy, 5-sulfopentyl, 6-sulfohexyl, 8-sulfooctyl and 6-sulfo-2-ethylhexyl, and any of these groups may be in the form of a salt with an alkali metal ion or an alkylammonium ion.

The preferred carboxyalkyl for R₁ and R₃ includes straight-chain or branched-chain carboxyalkyl groups each containing a total of 2∼18 carbon atoms, with straight-chain or branched-chain carboxyalkyl groups each containing a total of 2∼9 carbon atoms being particularly preferred. It is also preferable that at least one of such carboxyalkyl groups for R₁ and R₃ be in the form of a salt with an alkali metal ion or an alkylammonium ion. As specific examples, there can be mentioned 2-carboxyethyl, 3-carboxypropyl, 3-carboxybutyl, 4-carboxybutyl, 4-carboxy-3-methylbutyl, 2-(3-carboxypropoxy)ethyl,2-hydroxy-3-carboxypropyl, 3-carboxy-2-(2-ethoxy)ethoxypropoxy,5-carboxypentyl, 6-carboxyhexyl, 8-carboxyoctyl and 6-carboxy-2-ethylhexyl, each of which may be in the form of a salt with an alkali metal ion or an alkylammonium ion.

The preferred cycloalkyl of 5∼7 carbon atoms for R₁ and R₃ include cyclohexyl and cyclopentyl, with cyclohexyl being particularly preferred.

The preferred unsubstituted aryl groups for R₁ and R₃ are phenyl and naphthyl, with phenyl being particularly preferred.

The preferred substituted aryl groups for R₁ and R₃ are phenyl groups substituted by a straight-chain alkyl group of 1∼4 carbon atoms or an alkoxy group of 1∼4 carbon atoms, with phenyl substituted by methyl, ethyl, methoxy or ethoxy being particularly preferred. As specificexamples,4-methylphenyl,4-methoxyphenyl, 4-ethylphenyl and 4-ethoxyphenyl can be mentioned.

R₁ and R₃ each is preferably an alkyl group of 1∼18 carbon atoms, an alkoxyalkyl group containing a total of 2∼8 carbon atoms, a sulfoalkyl group containing 1∼18 carbon atoms, a carboxyalkyl group containing a total of 2∼18 carbon atoms, a cyclohexyl group, a phenyl group, or a phenyl group substituted by an alkyl group of 1∼4 carbon atoms or an alkoxy group containing 1∼4 carbon atoms.

The unsubstituted alkyl group referred to above for R₂ and R₄ is preferably a straight-chain or branched-chain alkyl group of 1∼8 carbon atoms, more preferably a straight-chain or branched-chain alkyl group of 1∼4 carbon atoms. As specific examples, methyl, ethyl, n-propyl, isopropyl, n-butyl, isobutyl, sec-butyl and n-octyl can be mentioned.

The substituted alkyl group referred to above for R₂ and R₄ is preferably an alkoxyalkyl group, more preferably an alkoxyalkyl group containing a total of 2∼8 carbon atoms. As specific examples, there can be mentioned 2-methoxyethyl, 3-methoxypropyl, 4-methoxybutyl, 2-ethoxyethyl, 3-ethoxypropyl, 4-ethoxybutyl, 2-n-propoxyethyl, 2-iso-propoxyethyl, 3-n-propoxypropyl, 4-n-propoxybutyl, 2-(2-methoxyethoxy)ethyl and 2-(2-ethoxyethoxy)ethyl.

The unsubstituted aryl group referred to above for R₂ and R₄ includes phenyl and naphthyl, although phenyl is preferred.

The substituted aryl group referred to above for R₂ and R₄ is preferably a phenyl group substituted by a straight-chain alkyl group of 1∼4 carbon atoms or an alkoxy group containing 1∼4 carbon atoms, more preferably a phenyl group substituted by methyl, ethyl, methoxy or ethoxy. As specific examples, 4-methylphenyl, 4-methoxyphenyl, 4-ethylphenyl and 4-ethoxyphenyl can be mentioned.

The preferred groups for R₂ and R₄ include alkyl groups of 1∼8 carbon atoms, alkoxyalkyl groups each containing a total of 2∼8 carbon atoms, a phenyl group, or a phenyl group substituted by an alkyl group of 1∼4 carbon atoms or an alkoxy group containing 1∼4 carbon atoms.

The unsubstituted alkyl group referred to above for R₅ and R₆ is preferably a straight-chain or branched chain alkyl group of 1∼8 carbon atoms, more preferably a straight-chain or branched-chain alkyl group of 1∼4 carbon atoms. As specific examples, there can be mentioned methyl, ethyl, n-propyl, isopropyl, n-butyl, isobutyl, sec-butyl, n-pentyl, isopentyl, neopentyl, n-hexyl, isohexyl, sec-hexyl, 2-ethylbutyl, n-heptyl, isoheptyl, sec-heptyl, n-octyl and 2-ethylhexyl.

Referring to the substituted alkyl group referred to above for R₅ and R₆, the substituent includes alkyloxy, alkylthio, hydroxy and halogen, among others, although alkyloxy is preferred. The alkyl substituted by alkyloxy, that is to say alkoxyalkyl, for R₅ and R₆ is preferably one containing a total of 2∼8 carbon atoms. As examples, there can be mentioned 2-methoxyethyl, 3-methoxypropyl, 4-methoxybutyl, 2-ethoxyethyl, 3-ethoxypropyl, 4-ethoxybutyl, 2-n-propoxyethyl, 2-iso-propoxyethyl, 3-n-propoxypropyl, 4-n-propoxybutyl, 2-(2-methoxyethoxy)ethyl and2-(2-ethoxyethoxy)ethyl.

The unsubstituted alkoxy group referred to above for R₅ and R₆ is preferably a straight-chain or branched-chain alkoxy group containing 1∼8 carbon atoms, more preferably a straight-chain or branched-chain alkoxy group containing 1∼4 carbon atoms. As specific examples, there can be mentioned methoxy, ethoxy, n-propoxy, n-butoxy, iso-butoxy, sec-butoxy, n-pentoxy, n-octyloxy, 2-ethylhexyloxy, 2-methoxyethoxy and 2-ethoxyethoxy.

With regard to the substituted alkoxy group referred to above for R₅ and R₆, the substituent includes alkyloxy, alkylthio, hydroxy and halogen, although alkyloxy is particularly preferred. The alkoxy group substituted by an alkyloxy group, that is to say alkoxyalkoxy, for R₅ and R₆ is preferably one having a total of 2∼8 carbon atoms. As specific examples, there can be mentioned 2-methoxyethoxy, 3-methoxypropoxy, 4-methoxybutoxy, 2-ethoxyethoxy, 3-ethoxypropoxy, 4-ethoxybutoxy, 2-n-propoxyethoxy, 2-iso-propoxyethoxy, 3-n-propoxypropoxy, 4-n-propoxybutoxy, 2-(2-methoxyethoxy)ethoxy and 2-(2-ethoxyethoxy)ethoxy.

R₅ and R₆ each is preferably a hydrogen atom, an alkyl group of 1∼8 carbon atoms, an alkoxy group containing 1∼8 carbon atoms, an alkoxyalkyl group containing a total of 2∼8 carbon atoms or an alkoxyalkoxy group containing a total of 2∼8 carbon atoms.

L represents an alkylene group of 2∼4 carbon atoms, which is either substituted or unsubstituted and forms a ring in combination with the carbon atom attached directly to X and the carbon atom on either side thereof, or a total of 3 carbon atoms.

The unsubstituted alkylene group for L is an alkylene group of 2∼4 carbon atoms, preferably an alkylene group of 2∼3 carbon atoms. As specific examples, ethylene, propylene and butylene can be mentioned.

The substituted alkylene group for L is an alkylene group containing 2∼4 carbon atoms and having a substituent or substituents selected from among straight-chain or branched-chain alkyl groups of 1∼4 carbon atoms. Particularly preferred is an alkylene group of 2∼3 carbon atoms having methyl or ethyl as a substituent or substituents. As specific examples, there can be mentioned 2-methylpropylene, 2-ethylpropylene and 2,2-dimethylpropylene.

X is preferably a hydrogen atom, a halogen atom, e.g. F, Cl, Br or I, an ethylamino group, a phenylamino group, or a diphenylamino group, more preferably Cl, Br, or diphenylamino.

Z represents a charge-neutralizing ion, including F⁻, Cl⁻, Br⁻, I⁻, BrO₄⁻, ClO₄⁻, p-toluenesulfonate, CH₃SO₃⁻, BF₄⁻, CH₃CO₂⁻, CF₃CO₂⁻, PF₆⁻, SbF₆⁻, Na⁺, K⁺, and triethylammonium ion, among others. Particularly preferred is Cl⁻, Br⁻, I⁻, ClO₄⁻, BF₄⁻, CF₃CO₂⁻, PF₆⁻, SbF₆⁻, CH₃SO₃⁻, p-toluenesulfonate, Na⁺, K⁺ or triethylammonium ion.

The following is a partial and by no means exhaustive listing of preferred species of the polymethine compound of general formula (I) according to the present invention.

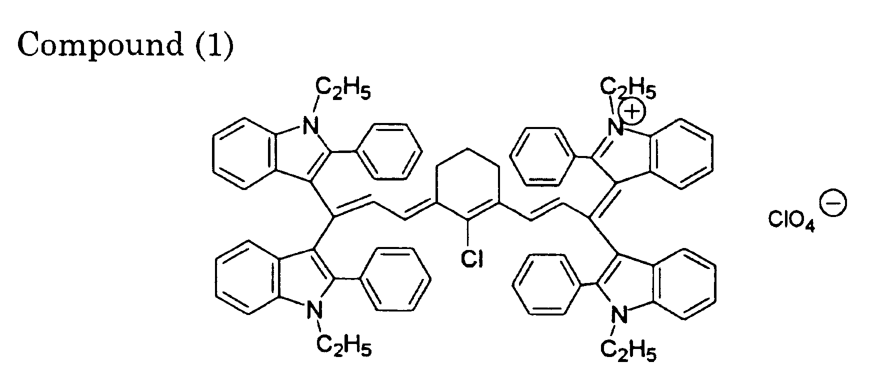

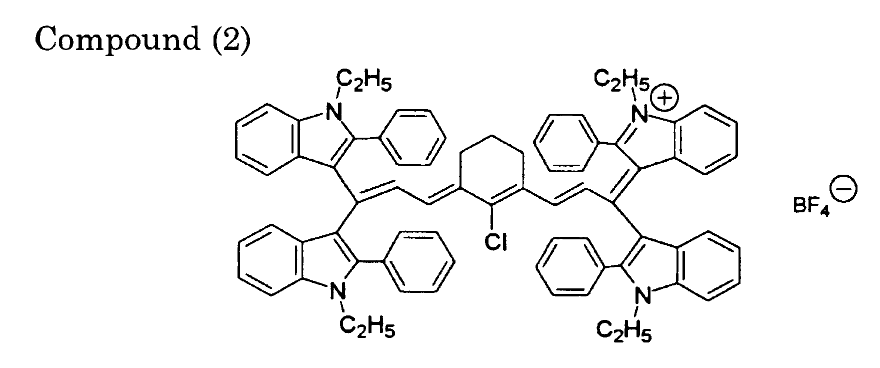

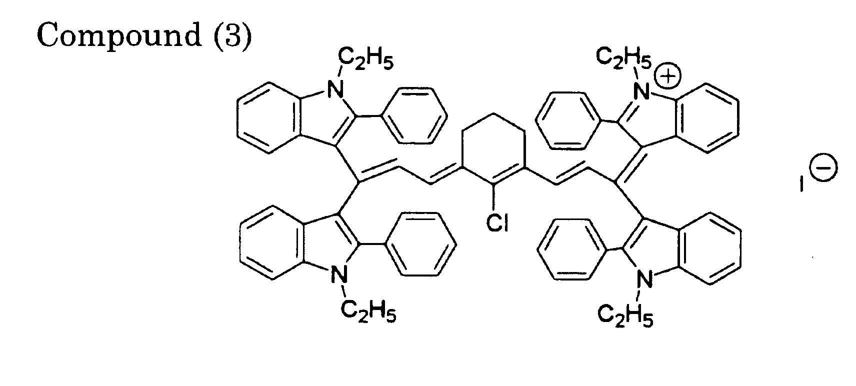

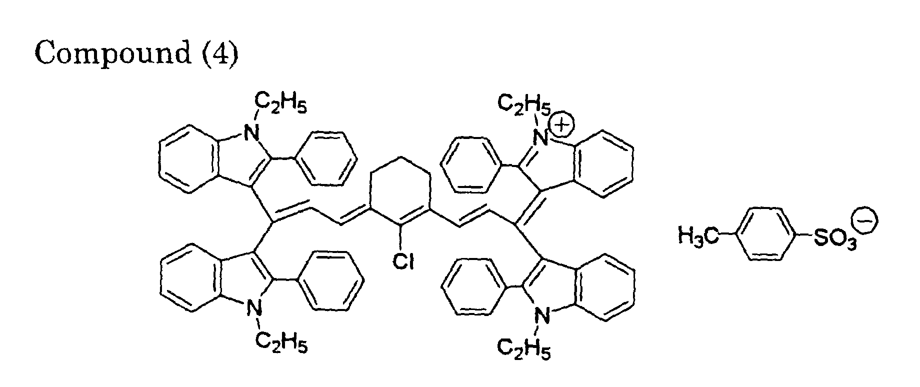

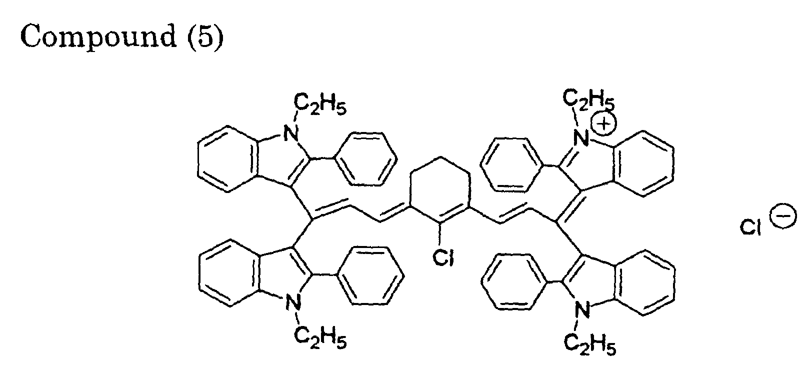

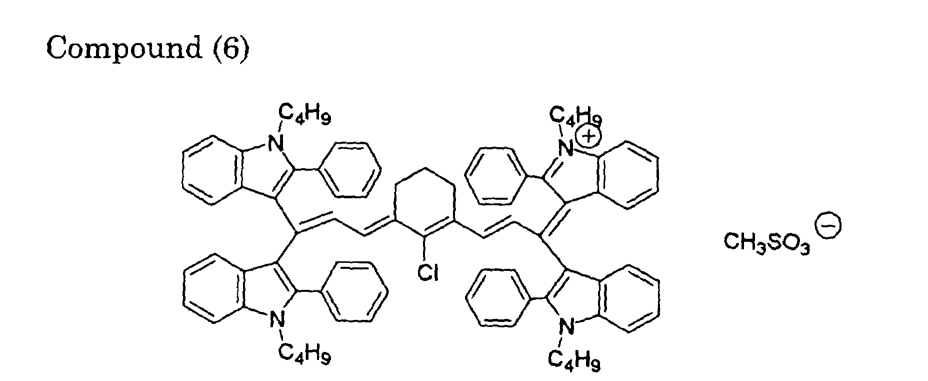

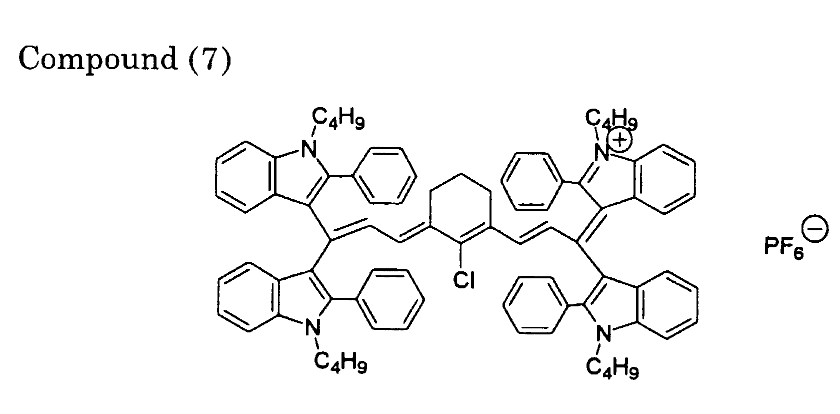

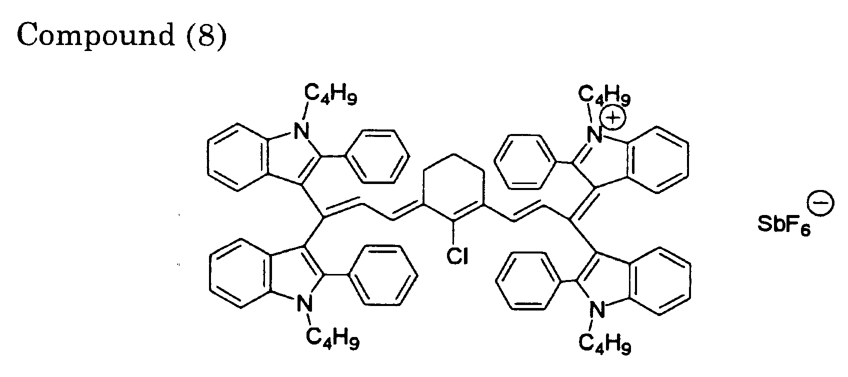

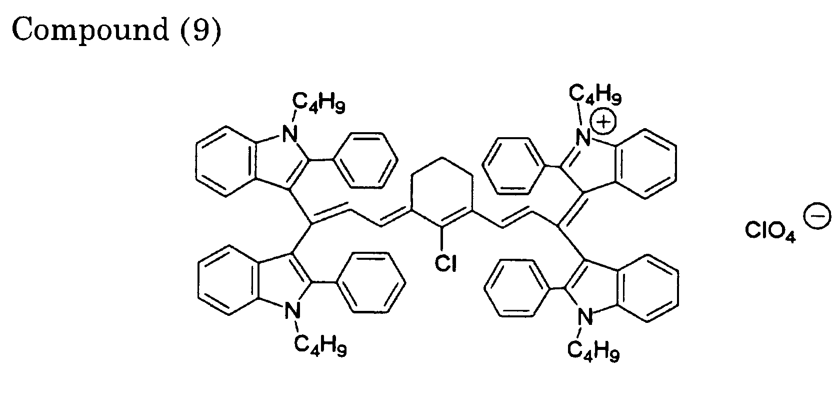

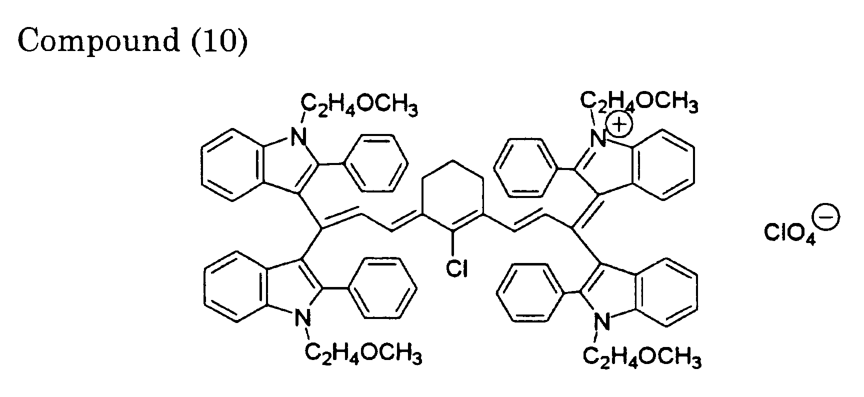

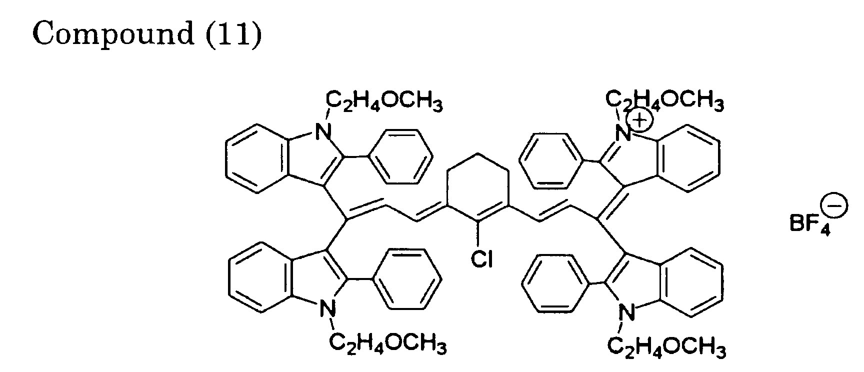

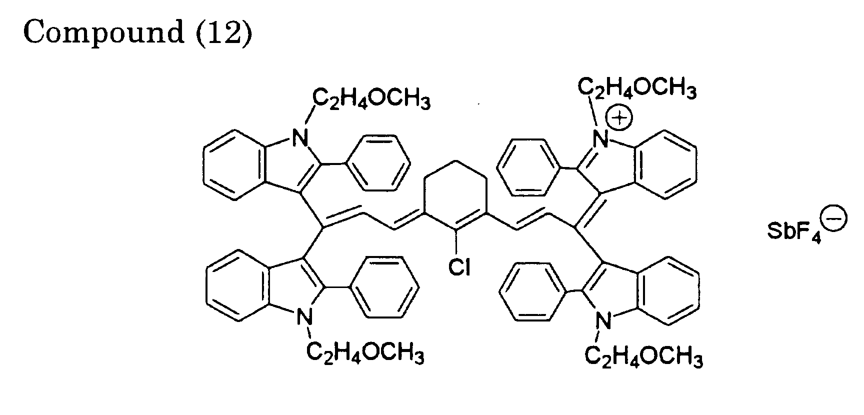

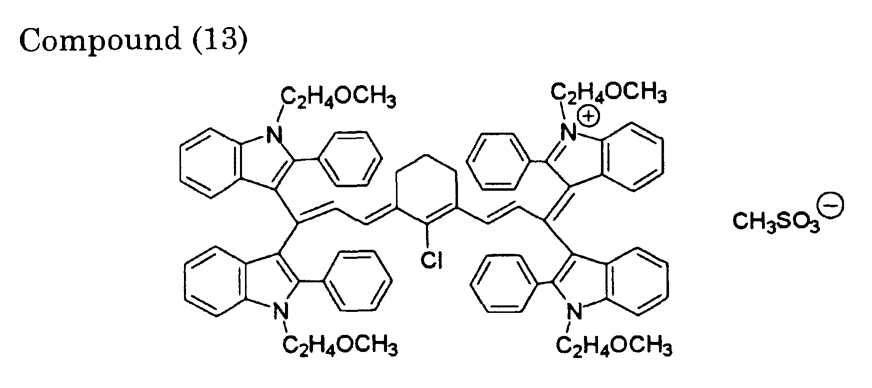

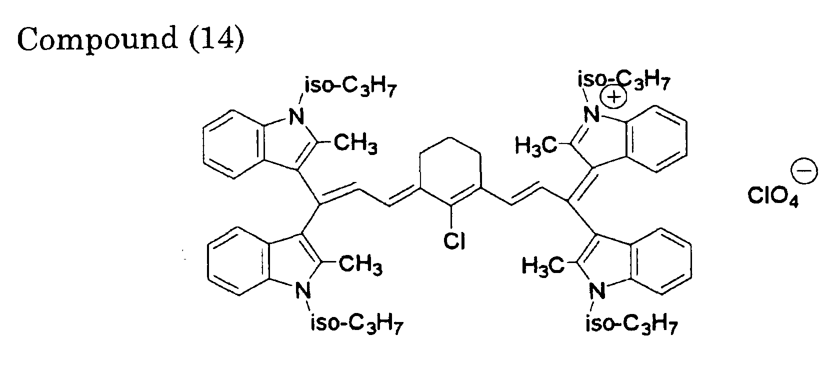

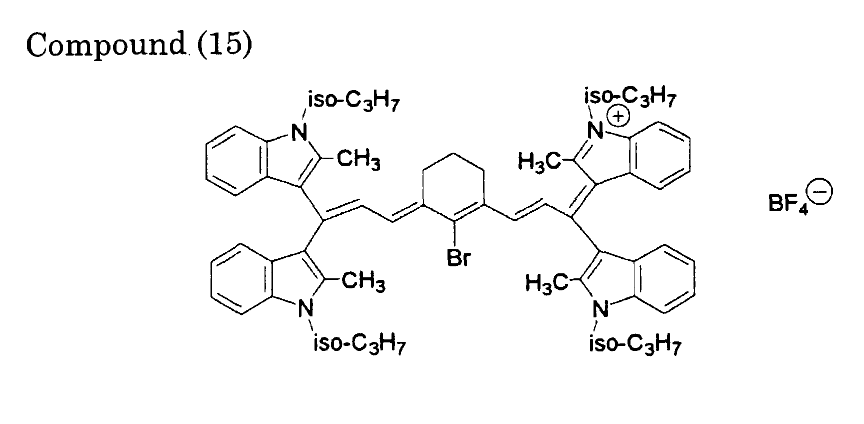

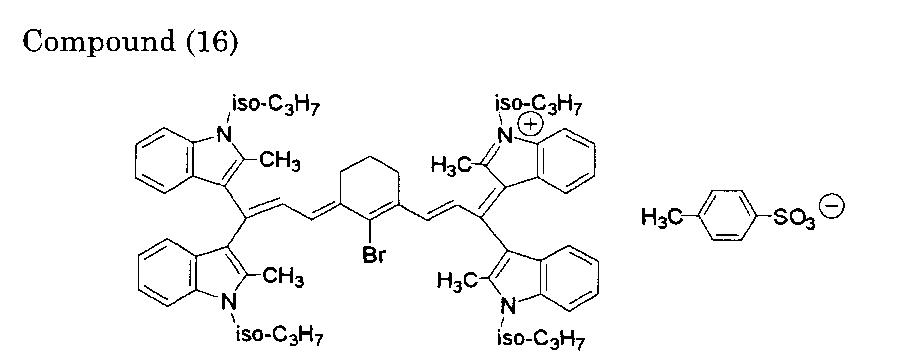

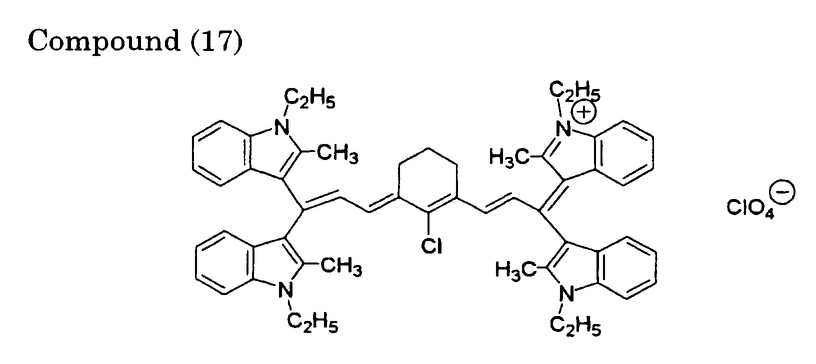

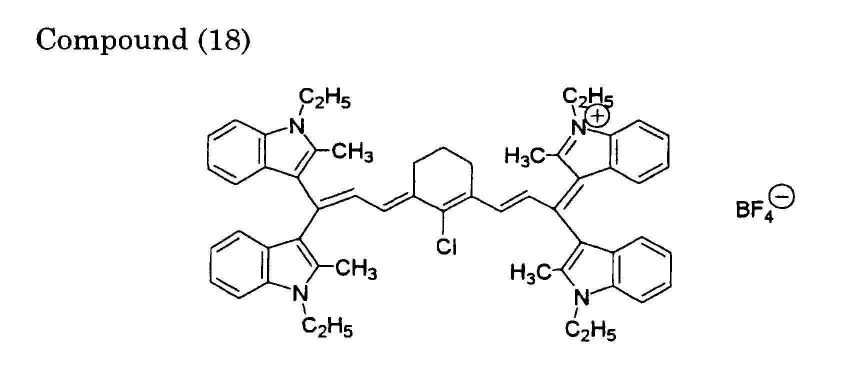

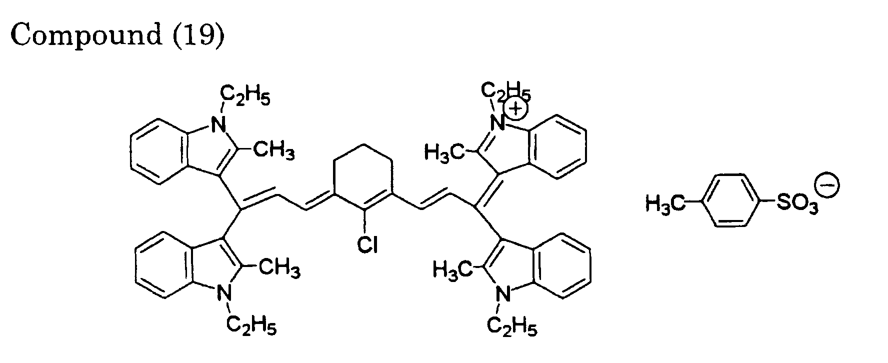

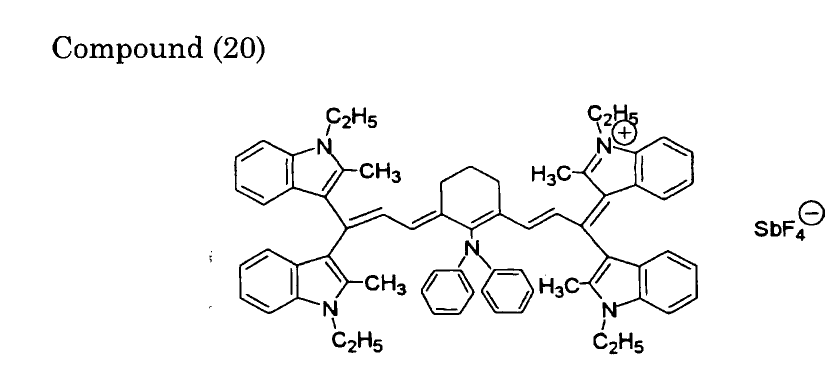

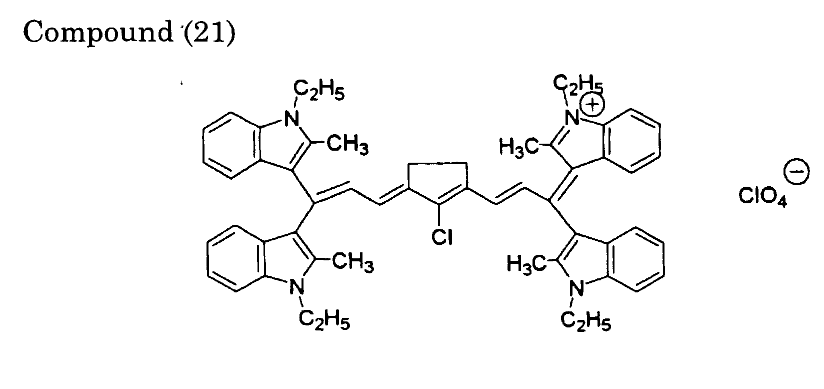

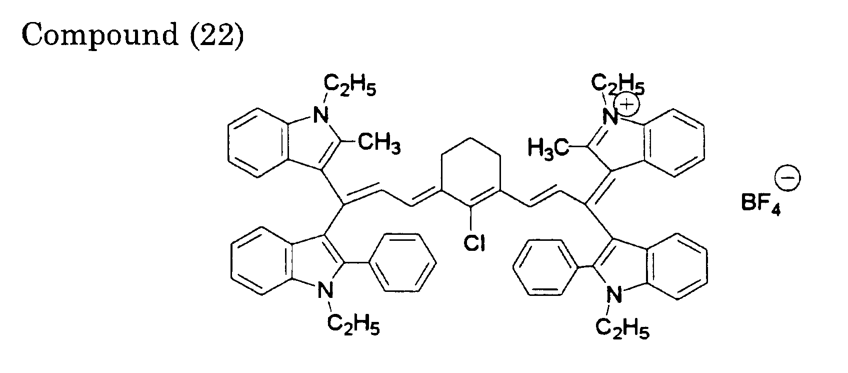

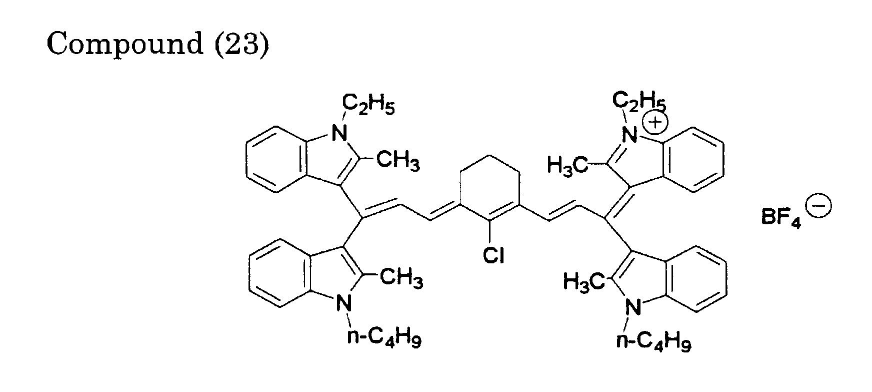

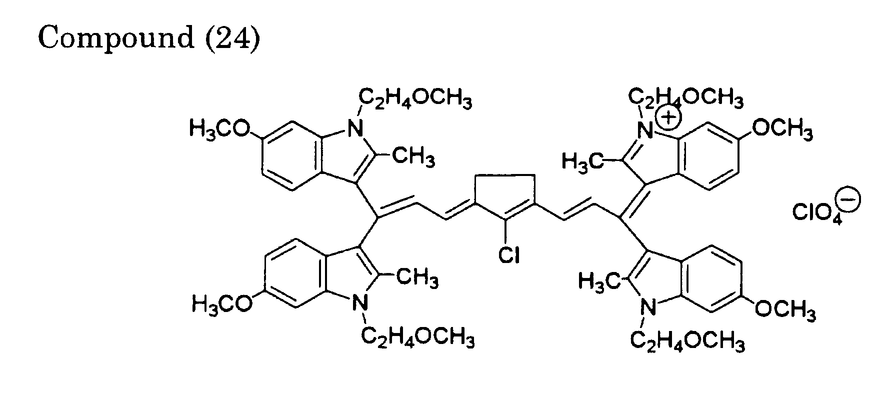

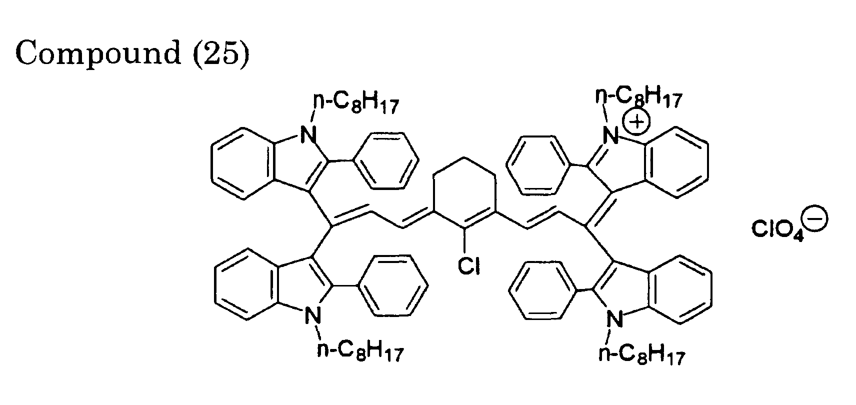

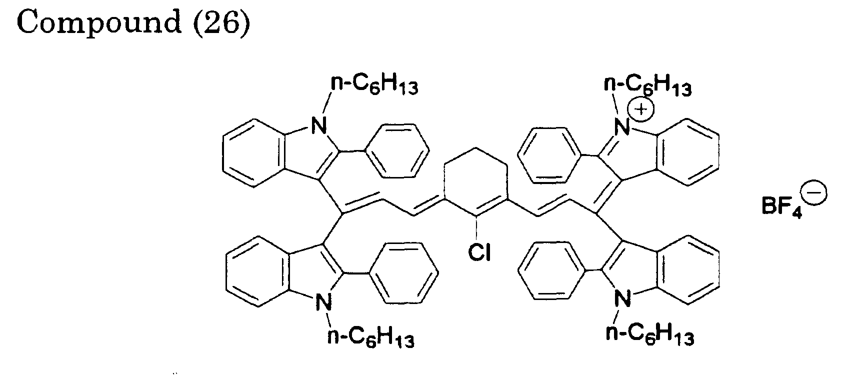

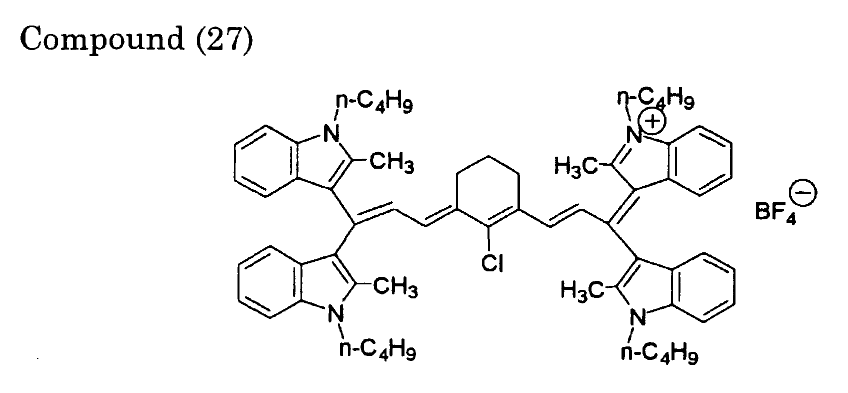

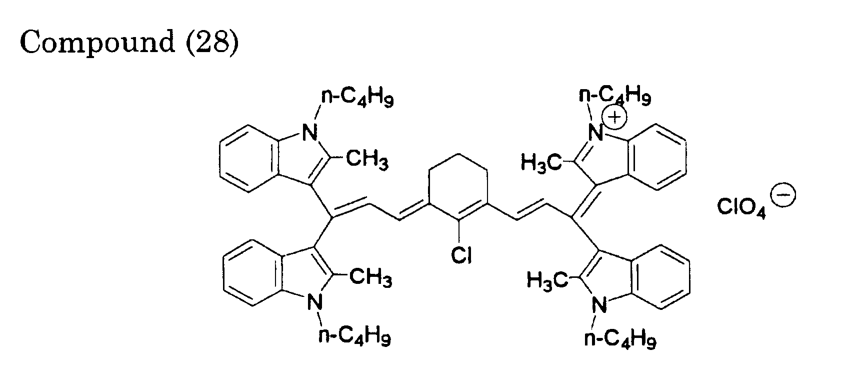

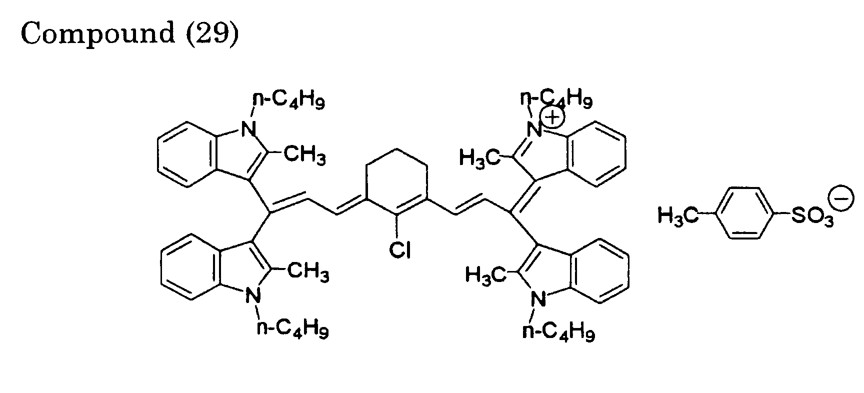

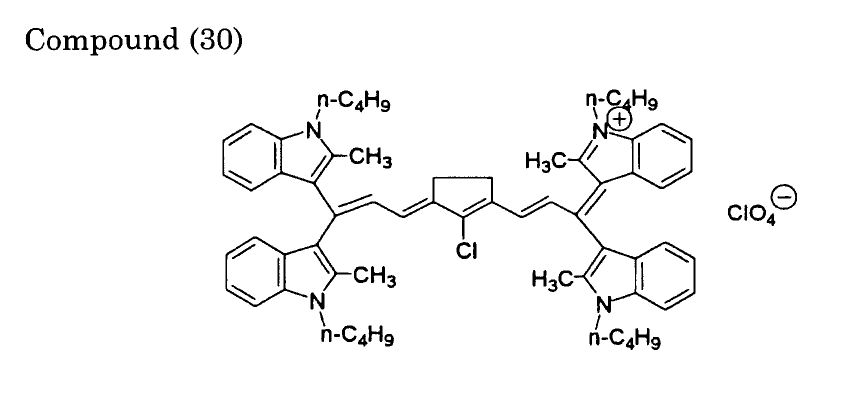

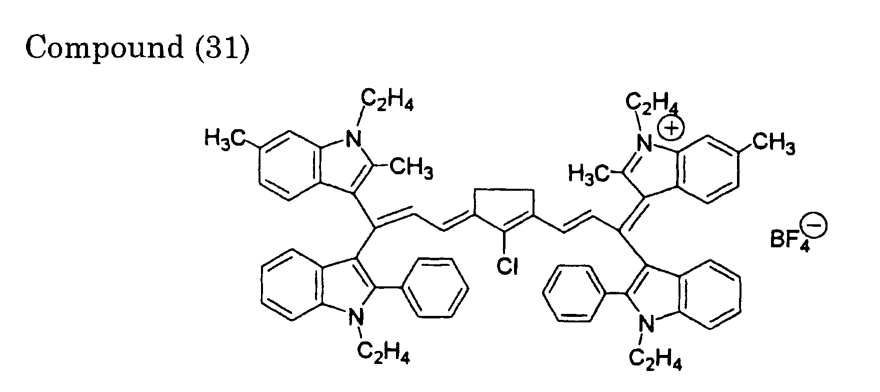

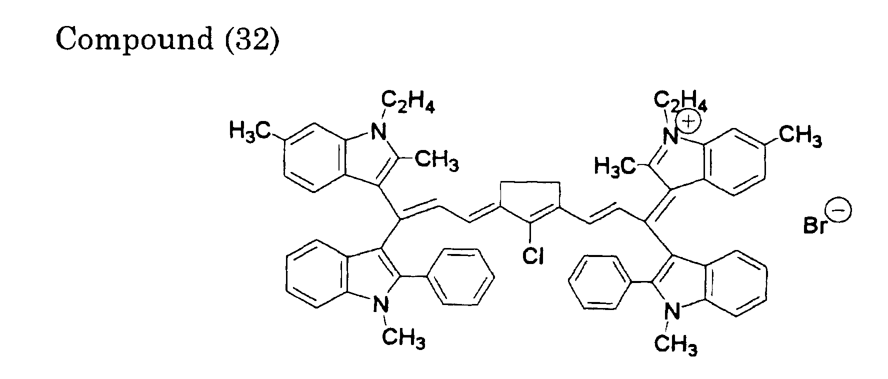

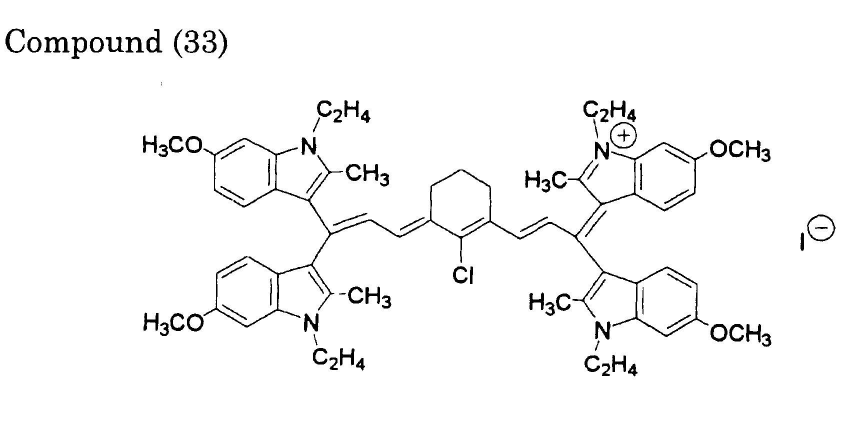

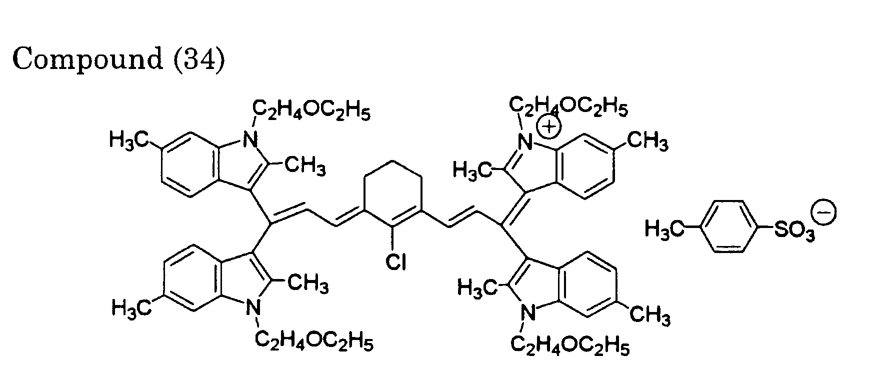

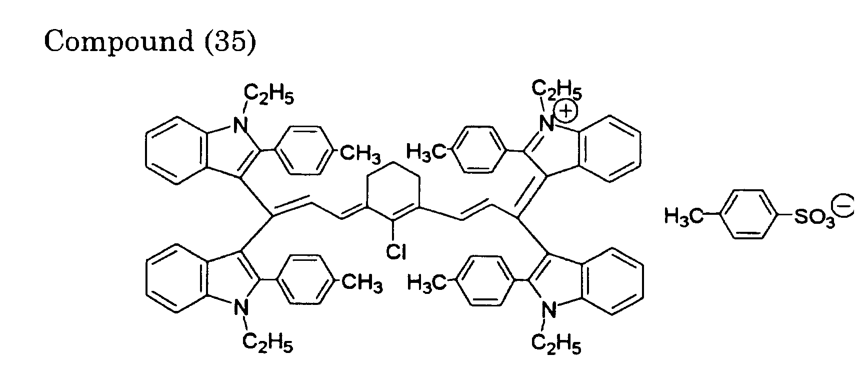

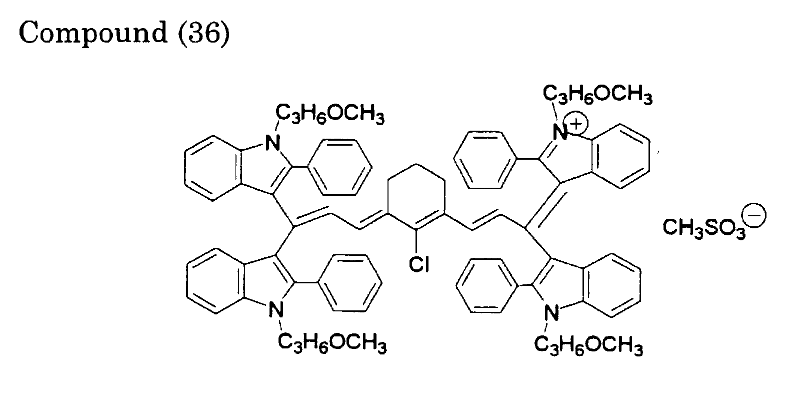

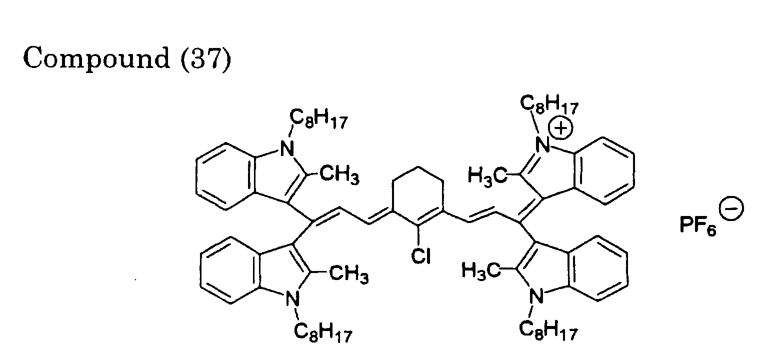

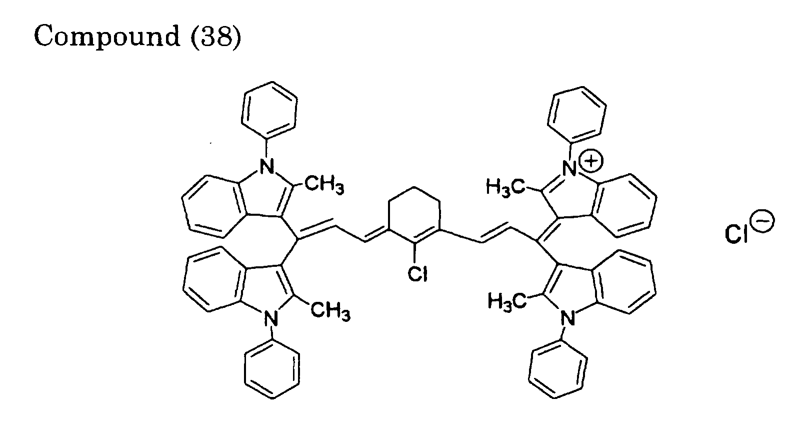

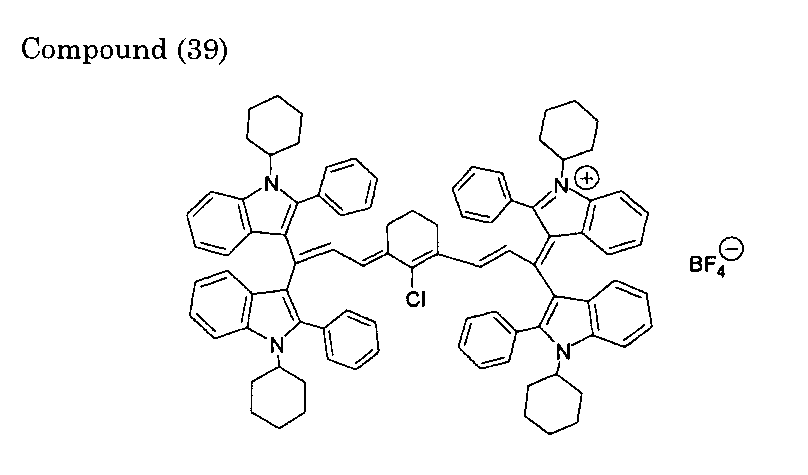

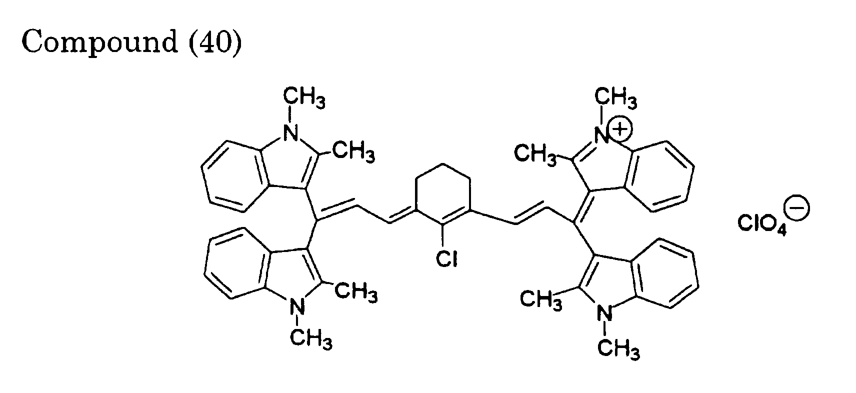

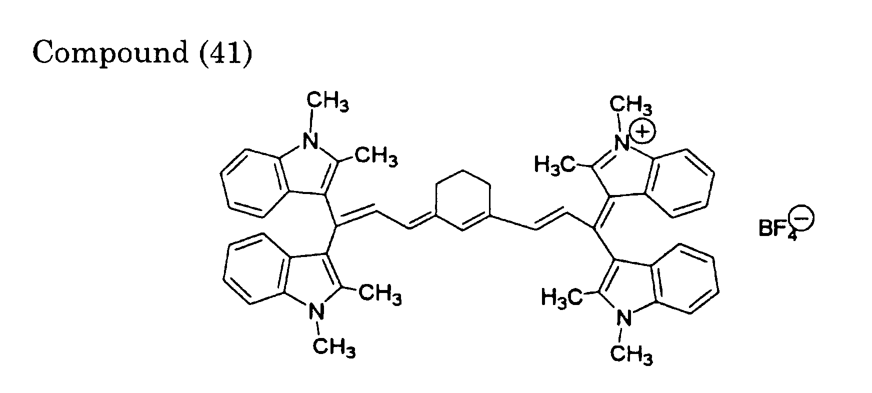

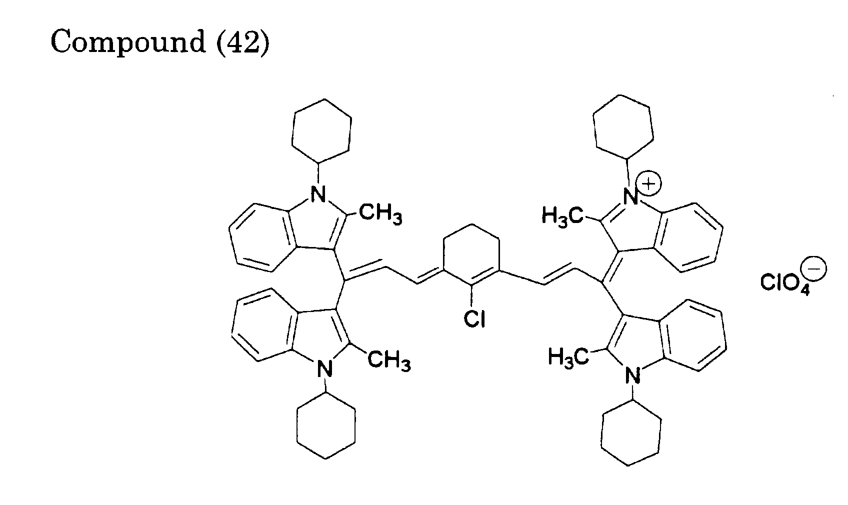

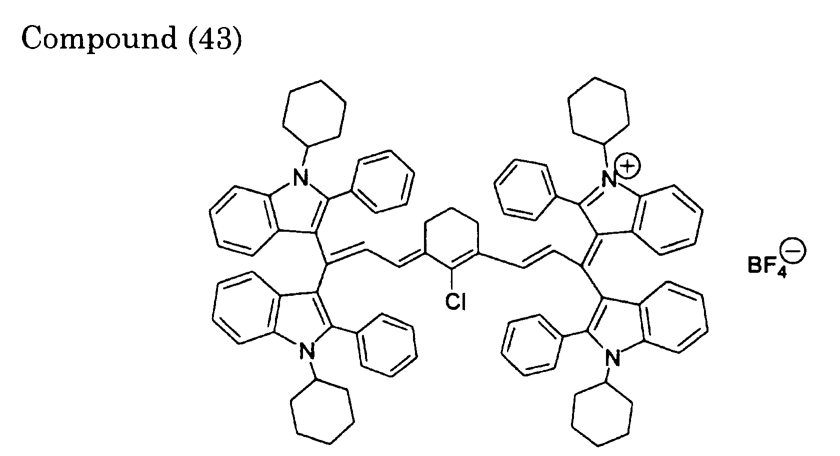

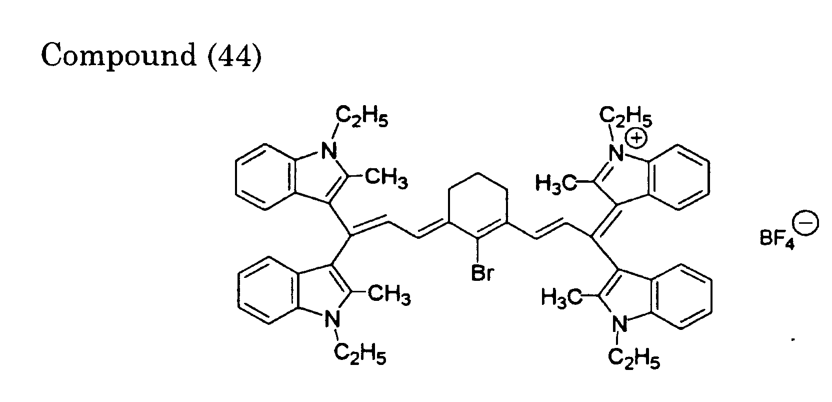

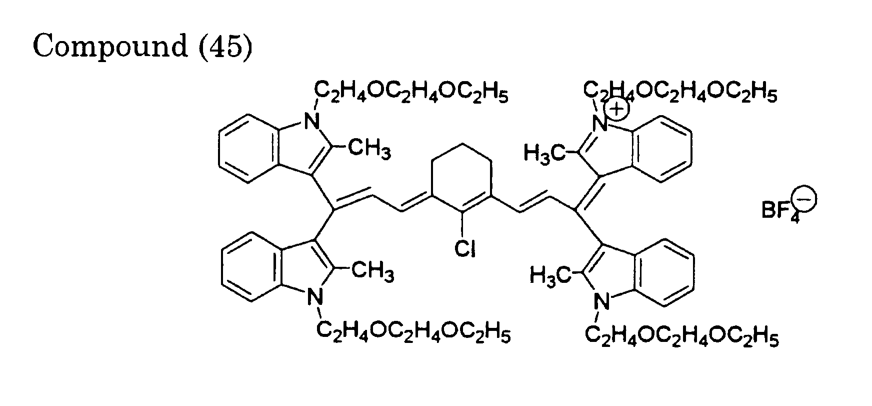

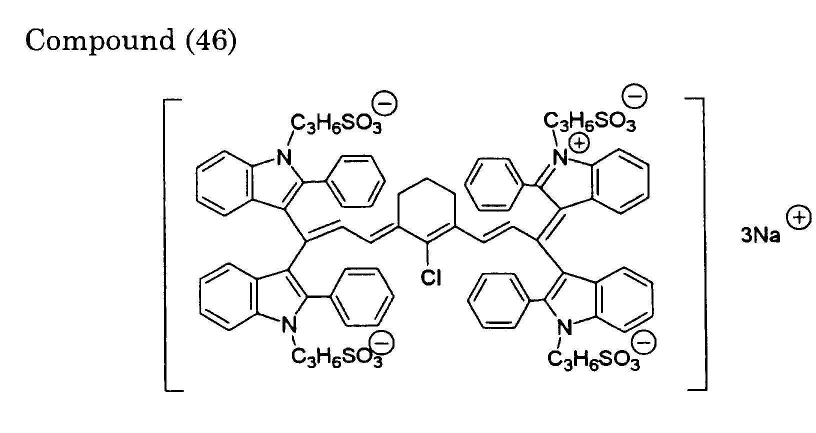

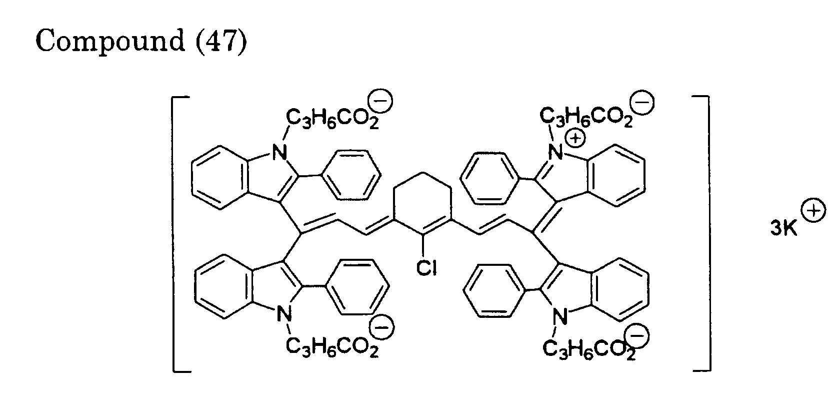

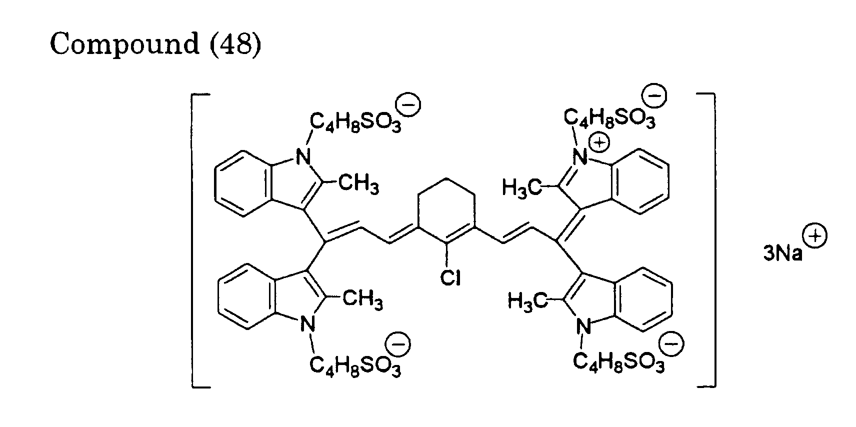

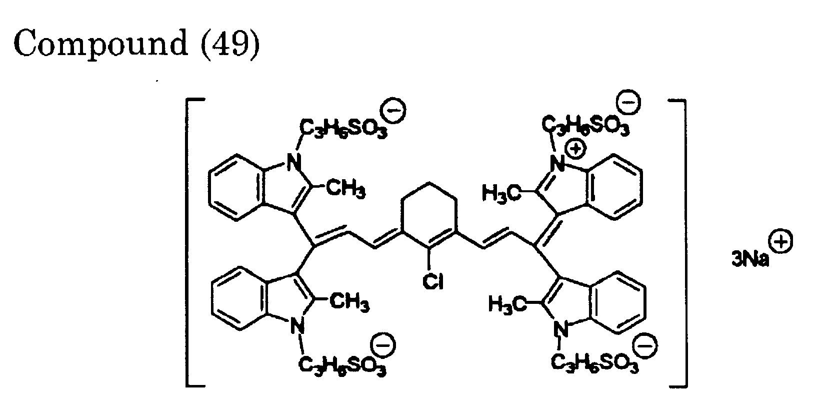

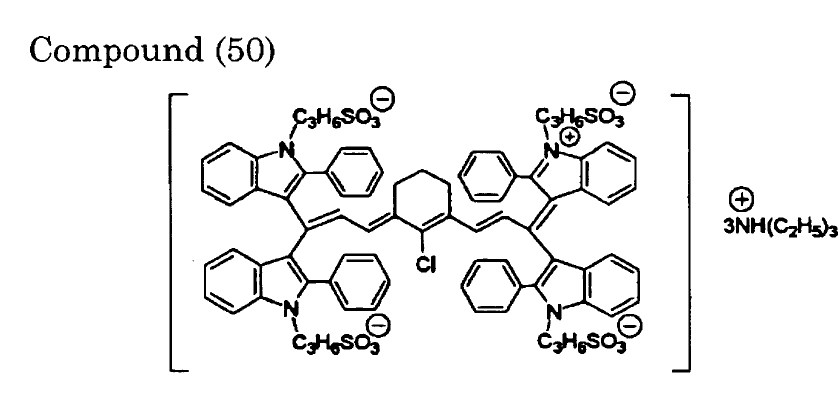

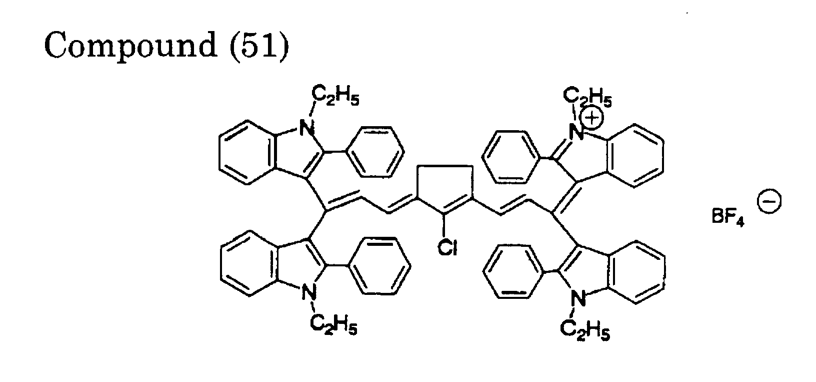

Among the above specific compounds (1)∼(51), the compounds represented by the following general formula (5) can also be represented by the following general formula (6). 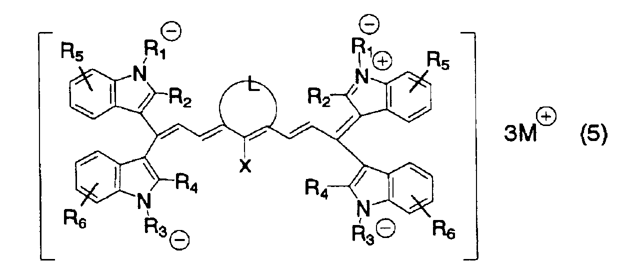 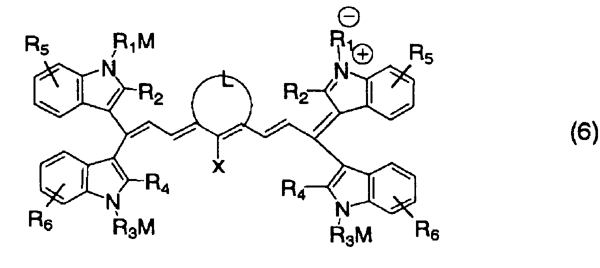 (wherein R₁∼R₆, X and L have the same meanings as defined hereinbefore; M represents Na, K or triethylammonium)

By way of illustration, the specific compound (46) can be written as:

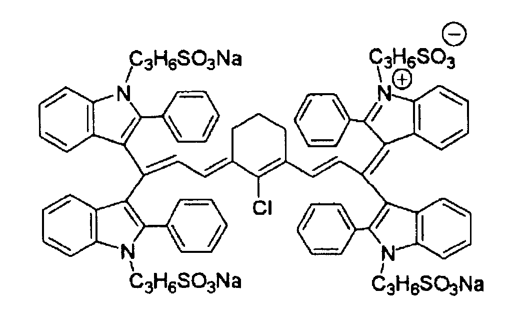

### [Process for producing the polymethine compound]

The polymethine compound of the present invention can be produced by, for example, subjecting a bisindolylethylene compound of general formula (2) and either a diformyl compound of general formula (3) or a dianil compound of the following general formula (4) to condensation reaction in the presence of an alkali metal salt in a dehydrative organic acid. Incidentally, Z in general formula (1) is derived from the acid residue of the alkali metal salt used. It should also be noted that Z can be changed to a different charge-neutralizing ion by an ion exchange technique, for example by dissolving the product of the above condensation reaction in a solvent, adding not less than one equivalent of an alkaline reagent to neutralize the acid residue and adding a different acidic reagent to the neutralized solution. 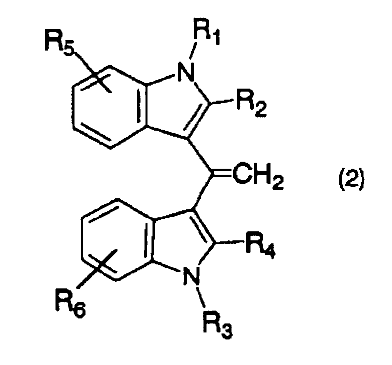 (wherein R₁∼R₅ have the same meanings as defined hereinbefore) 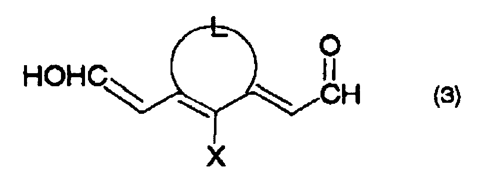 (wherein X and L have the same meanings as defined hereinbefore) 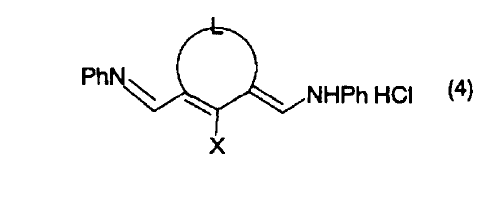 (wherein X and L have the same meanings as defined hereinbefore)

Referring to the above condensation reaction, the alkali metal salt includes KClO₄, KBF₄, sodium p-toluenesulfonate, sodium methanesulfonate, potassium acetate, sodium propionate, NaI and KBr, among others.

The alkali metal salt is used in a proportion of generally about 0.1∼5 moles, preferably about 1∼2.5 moles, per mole of the compound represented by the general formula (2).

The dehydrative organic acid includes but is not limited to acetic anhydride, propionic anhydride, butyric anhydride and γ-butyrolactone.

Such a dehydrative organic acid is used in a proportion of generally about 10∼100 moles, preferably about 20∼50 moles, per mole of the compound represented by the general formula (2).

As to the relative amount of the compound of general formula (2) and the compound of general formula (3) or (4), generally about 0.2∼1.5 moles, preferably about 0.4∼0.7 mole, of the latter is used per mole of the former.

The above reaction proceeds well at a temperature of generally about 10∼150°C, preferably 40∼120°C, and goes to completion generally in several minutes to about 3 hours.

After completion of the reaction, the objective product can be easily separated from the reaction mixture by injecting water or a solvent, e.g. methanol, ethanol, n-propanol, isopropyl alcohol or n-butanol, into the cooled reaction mixture or pouring the cooled reaction mixture in water or a solvent, e.g. methanol, ethanol, n-propanol, isopropyl alcohol or n-butanol. The reaction product thus obtained can be further purified by the conventional purification techniques such as recrystallization, column chromatography and so forth.

The compound of general formula (2) can be easily synthesized by reacting the corresponding indole compound with acetyl chloride in acetic anhydride at 50∼60°C for several hours.

The diformyl type compound of general formula (3) can be synthesized by, for example, the process described in Journal of Organic Chemistry, 42, 885-888 (1977). The dianil compound of general formula (4) can be easily synthesized by reacting the diformyl type compound of general formula (3) with aniline hydrochloride.

### [Near-infrared absorbing material]

The near-infrared absorbing material of the present invention may contain a binder resin and/or other component in addition to the polymethine compound of formula (1).

Furthermore, in addition to the polymethine compound of general formula (1), various known near-infrared absorbing materials can be concomitantly used within the range not departing from the spirit of the invention.

The near-infrared absorbing materials which can be used concomitantly include the common pigments, such as carbon black and aniline black, but also the various pigment type and dye type colors described in Near-Infrared-Absorbing Colors (p. 45-51) in "Kagaku Kogyo (Chemical Industry)", May, 1986 issue) and "Development and Market Trend of Functional Colors in the Ninties" CMC (1990), Chapter 2-2.3., such as polymethine colors (cyanine colors), phthalocyanine colors, dithiol metal complex salt colors, naphthoquinone and anthraquinone colors, triphenylmethane (analogous) colors, aminium and diimmonium colors, etc., as well as azo colors, indoaniline metal complex colors, intermolecular CT colors and so forth.

The binder resin is not particularly restricted but includes homopolymers and copolymers of acrylic monomers such as acrylic acid, mthacrylic acid, acrylic esters, methacrylic esters, etc.; cellulosic polymers such as methylcellulose, ethylcellulose, cellulose acetate, etc.; vinyl polymers and vinyl compound copolymers such as polystyrene, vinyl chloride-vinyl acetate copolymer, polyvinylpyrrolidone, polyvinyl butyral, polyvinyl alcohol, etc.; condensation polymers such as polyesters and polyamides, rubber type thermoplastic polymers such as butadiene-styrene copolymer, and polymers produced by the polymerization and crosslinking of photopolymerizable compounds such as epoxy compounds, among others.

In the application of the near-infrared absorbing material of the invention to optical recording materials such as optical cards, such materials can be fabricated by coating a glass, plastic resin or other substrate with a solution of the near-infrared absorbing material in an organic solvent by any of the various techniques heretofore tried in general with success, such as spin coating. The resin which can be used as the material of said substrate is not particularly restricted but includes acrylic resin, polyethylene resin, vinyl chloride resin, vinylidene chloride resin and polycarbonate resin, among others. The solvent to be used for spin coating is not particularly restricted but includes hydrocarbons, halogenated hydrocarbons, ethers, ketones, alcohols and Cellosolves, although alcohol solvents such as methanol, ethanol, propanol, etc. and Cellosolves such as methyl-Cellosolve, ethyl-Cellosolve, etc. are preferred.

For application of the near-infrared absorbing material of the invention in the field of near-infrared absorption filters, thermal-ray screens, or agricultural film, these can be manufactured by mixing the near-infrared absorbing material of the invention with a plastic resin and, depending on cases, an organic solvent as well and molding the mixture into a sheet or film by a conventional technique such as injection molding or casting. The resin which can be used is not particularly restricted but includes acrylic resin, polyethylene resin, vinyl chloride resin, vinylidene chloride resin and polycarbonate resin, among others. The solvent for use is not particularly restricted but includes hydrocarbons, halogenated hydrocarbons, ethers, ketones, alcohols and Cellosolves, although alcohol solvents such as methanol, ethanol, propanol, etc. and Cellosolve solvents such as methyl-Cellosolve and ethyl-Cellosolve are preferred.

For application of the near-infrared absorption filter to PDP, the usual procedure comprises forming a near-infrared absorption filter layer on a transparent substrate. The material of said transparent substrate is not particularly restricted but may be any material that is substantially transparent with little absorption and scattering. For example, glass, polyolefin resins, amorphous polyolefin resins, polyester resins, polycarbonate resins, poly(meth)acrylate resin, polyvinyl acetate, polyvinyl chloride, polystyrene, polyacrylate resins, polyethersulfone resins, etc. can be mentioned. Particularly preferred are amorphous polyolefin resins, polycarbonate resins, poly(meth)acrylate resins, polyarylate resins and polyethersulfone resins. These resins may have been formulated with any of the conventional additives in common use in the field. As such additives, there can be mentioned various antioxidants, flame retardants, thermal aging inhibitors, ultraviolet absorbers, lubricants and antistatic agents, among others.

In using the near-infrared absorbing material of the invention in a recording material such as a laser thermographic copying material or a laser thermal recording material, the near-infrared absorbing material may be used as formulated with a color-forming component or a color component or a discrete layer containing a color-forming component or a color component may be provided. As the color-forming component or color component, sublimable dyes or pigments, electron-donating dye precursor-electron-accepting compound systems, and the systems heretofore explored in which images are formed by heat-induced physicochemical changes in polymerizable polymers or the like can be employed. For example, the color component of a laser thermographic copying material is not particularly restricted but, as pigment type components, there can be mentioned inorganic pigments such as titanium dioxide, carbon black, zinc oxide, Prussian blue, cadmium sulfide, iron oxide, chromates of lead, zinc, barium and calcium, etc. and organic pigments such as azo, thioindigo, anthraquinone, anthanthrone, triphenodioxazine, phthalocyanine, quinacridone and other pigments. The dye which can be used includes acid dyes, direct dyes, disperse dyes, oil-soluble dyes and metal-containing oil-soluble dyes, among others.

The color-forming component for a laser thermal recording material is not particularly restricted but the substances which have heretofore been utilized in thermal recording materials can be employed. As electron-donating dye precursor, there is employed a compound having a partial skeleton in the form of a lactone, lactam, sultone, spiropyran, ester, amide, or the like, and developing color by giving off an electron or receiving a proton, for example from an acid, with said partial skeleton being opened or cleaved on contact with an electron-accepting compound. For example, there can be mentioned triphenylmethane compounds, fluoran compounds, phenothiazine compounds, indolyl-phthalide compounds, leucoauramine compounds, rhodamine-lactam compounds, triphenylmethane compounds, triazene compounds, spiropyran compounds, fluorene compounds and so forth. As the electron-accepting compound, there can be mentioned phenolic compounds, organic acids or metal salts thereof, and hydroxybenzoic esters, among others.

### [original plate for direct printing plate making]

The polymethine compound of the present invention can be used with advantage as a near-infrared absorbing material for an original plate for direct printing plate making. The original plate for direct printing plate making comprises a support and a photothermal conversion layer disposed thereon. Optionally, a silicone rubber layer may be superimposed on said photothermal conversion layer. Furthermore, a protective layer or the like may also be formed in superimposition.

Such a photothermal conversion layer comprises an image-forming component and a binder resin in addition to the above-described polymethine compound of the invention. Alternatively, a layer containing the image-forming component may be built up on a photothermal conversion layer.

As the image-forming component, the conventionally exploited materials which form images by undergoing physicochemical changes when heated can be utilized without any particular restriction. For example, a system comprising a microencapsulated heat-meltable substance and a binder resin as disclosed in JP Kokai H3-108588; a system comprising a blocked isocyanate and so on in combination with an active hydrogen-containing binder as disposed on a support having a hydrophilic surface as disclosed in JP Kokoku S62-164049; a system comprising a microencapsulated oleophilic component, a hydrophilic binder polymer, etc. as disclosed in JP Kokai H7-1849; a composition comprising an acid precursor, a vinyl ether group-containing -compound, an alkali-soluble resin, etc. as disclosed in JP Kokai H8-220752; a composition comprising a hydroxy-containing macromolecular compound, o-naphthoquinone diazide compound, etc. as disclosed in JP Kokai H9-5993; a composition comprising nitrocellulose, etc. as disclosed in JP Kokai H9-131977; and a composition comprising a polymerization initiator and an ethylenically unsaturated monomer, oligomer or macromonomer as disclosed in JP Kokai H9-146264, among others, can be mentioned. Depending on cases, the image area can be formed by laminating a silicone rubber layer on a photothermal conversion layer (a light-sensitive layer or a thermal recording layer) and, after exposure to light, bringing into intimate contact or removing the silicone rubber layer as disclosed in JP Kokai H9-80745, JP Kokai H9-131977 and JP Kokai H9-146264, among other publications.

The binder resin for use in the photothermal conversion layer is not particularly restricted but includes homopolymers and copolymers of acrylic monomers such as acrylic acid, mthacrylic acid, acrylic esters, methacrylic esters, etc.; cellulosic polymers such as methylcellulose, ethylcellulose, cellulose acetate, etc.; vinyl polymers and vinyl compound copolymers such as polystyrene, vinyl chloride-vinyl acetate copolymer, polyvinylpyrrolidone, polyvinyl butyral, polyvinyl alcohol, etc.; condensation polymers such as polyesters and polyamides, rubber type thermoplastic polymers such as butadiene-styrene copolymer, and polymers produced by the polymerization and crosslinking of photopolymerizable compounds such as epoxy compounds, among others.

The printing original plate according to the invention should have a degree of flexibility that permits setting on the ordinary printing press and, at the same time, is sturdy enough to withstand the load applied in printing. Thus, the support which can be used includes a sheet of paper, plastic (e.g. polyethylene, polypropylene, polystyrene or the like)-laminated paper, a metal plate made of e.g. aluminum (inclusive of aluminum alloys), zinc, copper or the like, or a plastic film made of, for example, cellulose diacetate, cellulose triacetate, cellulose butyrate, polyethylene terephthalate, polyethylene, polystyrene, polypropylene, polycarbonate, polyvinyl acetal or other plastic material. As typical support materials, coated paper, aluminum or other metal sheet, polyethylene terephthalate or other plastic film, rubber, and various composites thereof can be mentioned. The preferred materials are aluminum, aluminum alloys and plastic film. The thickness of the support is 25 µm ∼ 3 mm, preferably 100 µm ∼ 500 µm.

Usually, the original plate for printing is fabricated by dispersing or dissolving the polymethine compound, image-forming component, binder resin, etc. in an organic solvent or the like and coating a support with the resulting dispersion or solution.

The solvent which can be used as above includes water; alcohols such as methanol, isopropyl alcohol, isobutyl alcohol, cyclopentanol, cyclohexanol, diacetone alcohol, etc.; Cellosolve solvents such as methyl-Cellosolve, ethyl-Cellosolve, etc.; aromatic hydrocarbon solvents such as toluene, xylene, chlorobenzene, etc.; esters such as ethyl acetate, butyl acetate, isoamyl acetate, methyl propionate, etc.; ketones such as acetone, methyl ethyl ketone, methyl isobutyl ketone, cyclohexanone, etc.; chlorinated hydrocarbons such as methylene chloride, chloroform, trichloroethylene, etc.; ethers such as tetrahydrofuran, dioxane, etc.; and aprotic polar solvents such as N,N-dimethylformamide and N-methylpyrrolidone.

Between the support and the photothermal conversion layer may be interposed a primer layer for improved adhesion and improved printing characteristics. The support itself may be subjected to surface treatment. The primer layer which can be disposed includes cured artifacts obtained by photocuring of various photosensitive polymers before formation of the photothermal conversion layer as disclosed in JP Kokai S60-22903, the cured artifact obtained by the heat-curing of an epoxy resin as disclosed in JP Kokai S62-50760; a hardened gelatin layer as disclosed in JP Kokai H3-200965; the artifact constructed by using a urethane resin and a silane coupling agent as disclosed in JP Kokai H3-200965; and the artifact constructed by using a urethane resin as disclosed in JP Kokai H3-273248.

To provide a protective film for protecting the surface of the photothermal conversion layer or of the silicone rubber layer, a transparent film, such as a film of polyethylene, polypropylene, polyvinyl chloride, polyvinylidene chloride, polyvinyl alcohol, polyethylene terephthalate, cellophane or the like, may be laminated or such a film may be applied after stretching.

The original plate for direct printing plate making according to the invention is compatible with a YAG laser having a defined emission band. Thus, for the fabrication of a duplicate printing plate from this original plate, the original plate is irradiated with laser light by the known technique using a YAG laser having an emission band of 900∼1100 nm as the light source to form image areas or non-image areas, whereby digital data from a computer or the like are recorded.

### EXAMPLES

The following examples are intended to describe the present invention in further detail and should by no means be construed as defining the scope of the invention.

### Example 1

### Polymethine compound [synthesis of specific compound (1) ]

To 14 ml of acetic anhydride were added 2.00 g of the indolylethylene compound of general formula (2) (R₁ = R₃ = ethyl; R₂ = R₄=phenyl; R₅ = R₆ = hydrogen atom), 0.81 g of the dianil compound of general formula (4) (L = propylene; X = Cl) and 1.28 g of potassium perchlorate, and the mixture was stirred at 95∼100°C for 30 minutes. After cooling, the reaction mixture was poured into 150 ml of water. The resulting precipitate was recovered by filtration, rinsed with water, dried and recrystallized from methanol to give 1.93 g of specific compound (1).

The elemental analysis, melting point, maximum absorption wavelength (λmax) and gram-absorption coefficient (ε g) of this compound were as follows. Elemental analysis (C₇₆H₆₆Cl₂N₄O₄) : MW = 1170.3

| | C | H | N |
|---|---|---|---|
| Calcd. (%) | 78.00 | 5.68 | 4.79 |
| Found (%) | 78.02 | 5.71 | 4.77 |

Melting point (°C): 179∼181°C
λmax: 1007 nm (in diacetone alcohol)
εg : 1.18×10⁵ ml/g·cm

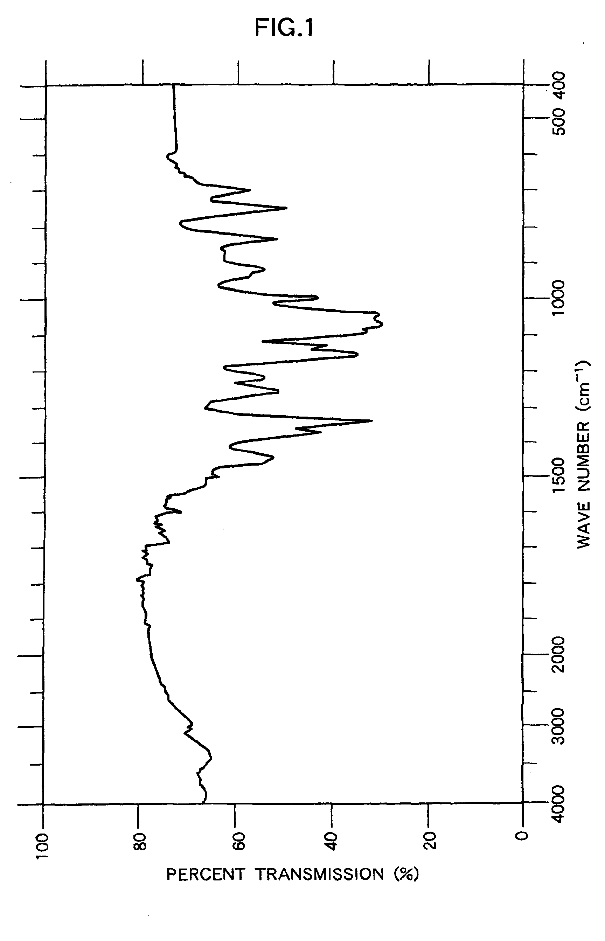

The IR spectrum of the compound obtained is shown in Fig. 1.

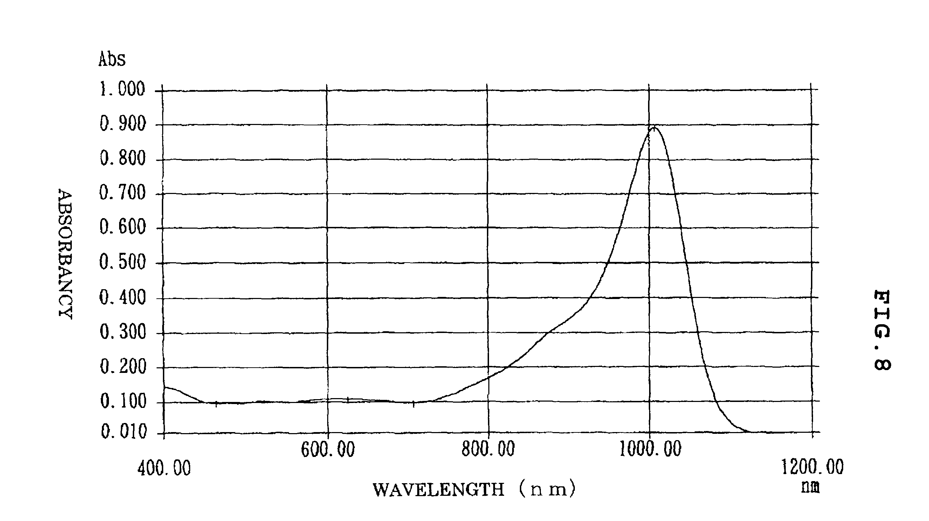

The VIS-NIR absorption spectrum of the same compound is shown in Fig. 8.

### Example 2

### Polymethine compound [synthesis of specific compound (2)]

To 14 ml of acetic anhydride were added 2.0 g of the indolylethylene compound of general formula (2) (R₁ = R₃ = ethyl; R₂ = R₄=phenyl; R₅ = R₆ = hydrogen atom), 0.72 g of the dianil compound of general formula (4) (L = propylene; X = Cl) and 1.16 g of potassium borofluoride, and the mixture was stirred at 95∼100°C for 60 minutes. After cooling, the reaction mixture was poured into 150 ml of water. The resulting precipitate was recovered by filtration, rinsed with water, dried and recrystallized from methanol to give 2.01 g of specific compound (2).

The elemental analysis, melting point, maximum absorption wavelength (λmax) and gram-absorption coefficient (ε g) of this compound were as follows. Elemental analysis (C₇₆H₆₆BClF₄N₄) : MW = 1157.6

| | C | H | N |
|---|---|---|---|
| Calcd. (%) | 78.85 | 5.75 | 4.84 |
| Found (%) | 78.89 | 5.77 | 4.81 |

Melting point (°C): 195∼197°C
λmax: 1007 nm (in diacetone alcohol)
εg : 1.21×10⁵ ml/g·cm

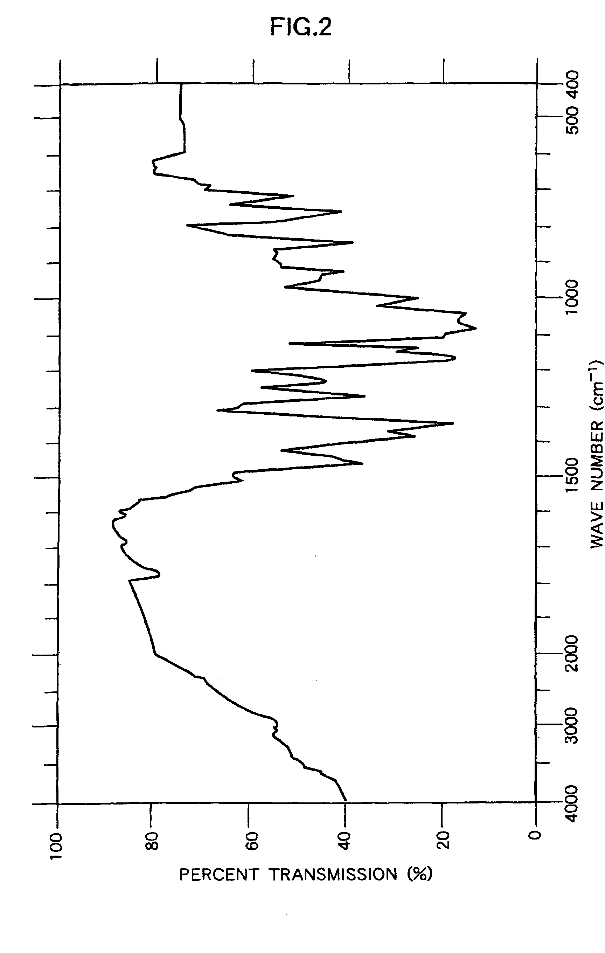

The IR spectrum of the compound obtained is shown in Fig. 2.

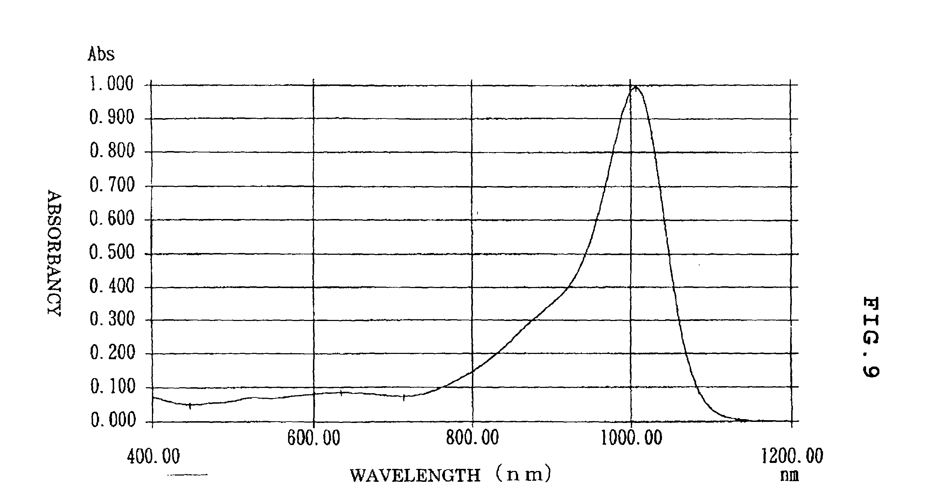

The VIS-NIR absorption spectrum of the same compound is shown in Fig. 9.

### Example 3

### Polymethine compound [synthesis of specific compound (17)]

To 14 ml of acetic anhydride were added 1.47 g of the indolylethylene compound of general formula (2) (R₁ = R₃ = ethyl; R₂ = R₄=phenyl; R₅ = R₆ = hydrogen atom), 0.81 g of the dianil compound of general formula (4) (L = propylene; X = Cl) and 1.28 g of potassium perchlorate, and the mixture was stirred at 115∼120°C for 2.5 hours. After cooling, the reaction mixture was poured into 150 ml of water. The resulting precipitate was recovered by filtration, rinsed with water, dried and recrystallized from methanol to give 1.64 g of specific compound (17).

The elemental analysis, melting point, maximum absorption wavelength (λmax) and gram-absorption coefficient (εg) of this compound were as follows. Elemental analysis (C₅₆H₅₈Cl₂N₄O₄) : MW = 922.0

| | C | H | N |
|---|---|---|---|
| Calcd. (%) | 72.95 | 6.34 | 6.08 |
| Found (%) | 73.03 | 6.27 | 6.03 |

Melting point (°C): 161∼163°C
λmax: 976 nm (in diacetone alcohol)
εg : 1.29×10⁵ ml/g·cm

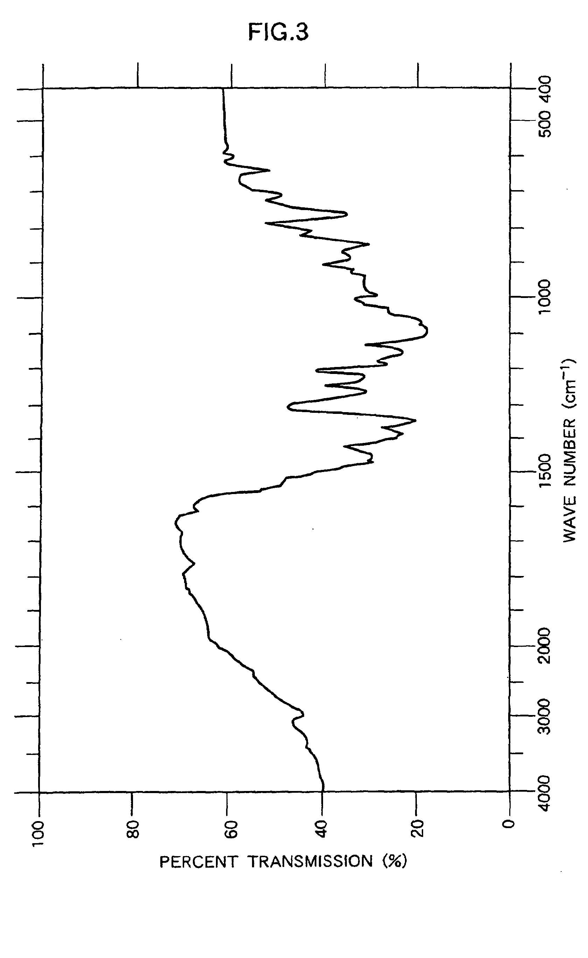

The IR spectrum of the compound obtained is shown in Fig. 3.

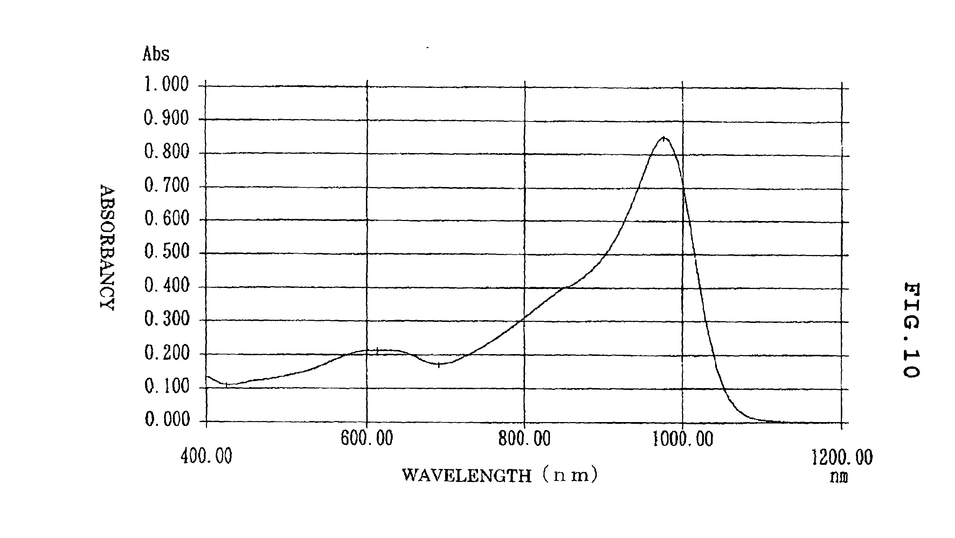

The VIS-NIR absorption spectrum of the same compound is shown in Fig. 10.

### Example 4

### Polymethine compound [synthesis of specific compound (18)]

To 14 ml of acetic anhydride were added 1.47 g of the indolylethylene compound of general formula (2) (R₁ = R₃ = ethyl; R₂ = R₄= methyl; R₅ = R₆ = hydrogen atom) , 0.81 g of the dianil compound of general formula (4) (L = propylene; X = Cl) and 1.16 g of potassium borofluoride, and the mixture was stirred at 95∼100°C for 60 minutes. After cooling, the reaction mixture was poured into 150 ml of water. The resulting precipitate was recovered by filtration, rinsed with water, dried and recrystallized from methanol to give 1.61 g of specific compound (18).

The elemental analysis, melting point, maximum absorption wavelength (λmax) and gram-absorption coefficient (ε g) of this compound were as follows. Elemental analysis (C₅₆H₅₈BClF₄N₄) : MW = 909.3

| | C | H | N |
|---|---|---|---|
| Calcd. (%) | 73.97 | 6.43 | 6.16 |
| Found (%) | 73.94 | 6.46 | 6.21 |

Melting point (°C): 174∼176°C
λmax: 975 nm (in diacetone alcohol)
εg : 1.25×10⁵ ml/g·cm

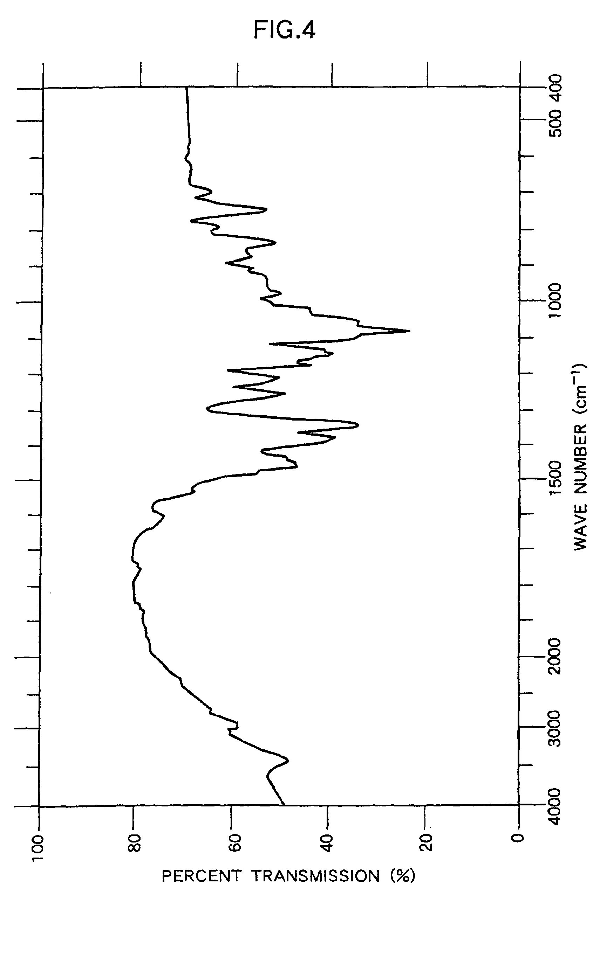

The IR spectrum of the compound obtained is shown in Fig. 4.

### Example 5

### Polymethine compound [synthesis of specific compound (22)]

To 14 ml of acetic anhydride were added 1.74 g of the indolylethylene compound of general formula (2) (R₁ = R₃ = ethyl; R₂ = methyl; R₄=phenyl; R₅ = R₆ = hydrogen atom), 0.81 g of the dianil compound of general formula (4) (L = propylene; X = Cl) and 1.17 g of potassium borofluoride, and the mixture was stirred at 95∼100°C for 2 hours. After cooling, the reaction mixture was poured into 150 ml of water. The resulting precipitate was recovered by filtration, rinsed with water, dried and recrystallized from methanol to give 1.62 g of specific compound (22).

The elemental analysis, melting point, maximum absorption wavelength (λmax) and gram-absorption coefficient (εg) of this compound were as follows. Elemental analysis (C₆₆H₆₂BClF₄N₄) : MW = 1033.5

| | C | H | N |
|---|---|---|---|
| Calcd. (%) | 76.70 | 6.05 | 5.42 |
| Found (%) | 76.64 | 6.02 | 5.45 |

Melting point (°C): 192∼194°C
λmax:989 nm (in diacetone alcohol)
εg : 1.09×10⁵ ml/g·cm

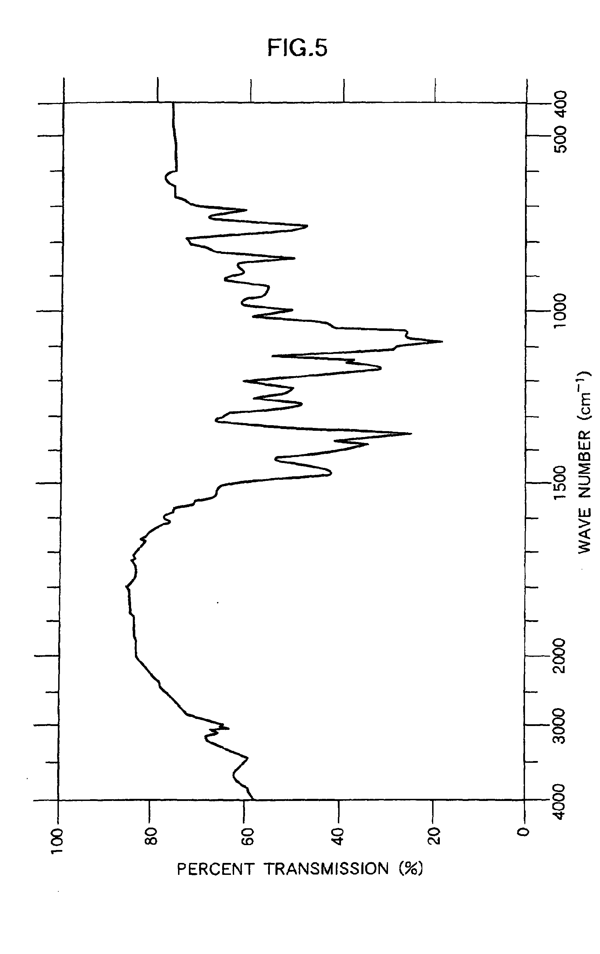

The IR spectrum of the compound obtained is shown in Fig. 5.

### Example 6

### Polymethine compound [synthesis of specific compound (28)]

To 14 ml of acetic anhydride were added 1.71 g of the indolylethylene compound of general formula (2) (R₁ = R₃ = butyl; R₂ = R₄= methyl; R₅ = R₆ = hydrogen atom) , 0.81 g of the dianil compound of general formula (4) (L = propylene; X = Cl) and 1.28 g of potassium perchlorate, and the mixture was stirred at 95∼100°C for 2.0 hours. After cooling, the reaction mixture was poured into 150 ml of water. The resulting precipitate was recovered by filtration, rinsed with water, dried and recrystallized from methanol to give 1.51 g of specific compound (28).

The elemental analysis, melting point, maximum absorption wavelength (λmax) and gram-absorption coefficient (εg) of this compound were as follows. Elemental analysis (C₆₄H₇₄Cl₂N₄O₄) : MW = 1034.2

| | C | H | N |
|---|---|---|---|
| Calcd. (%) | 74.33 | 7.21 | 5.42 |
| Found (%) | 74.29 | 7.25 | 5.39 |

Melting point (°C): 161∼163°C
λmax: 985 nm (in diacetone alcohol)
εg : 1.11×10⁵ ml/g·cm

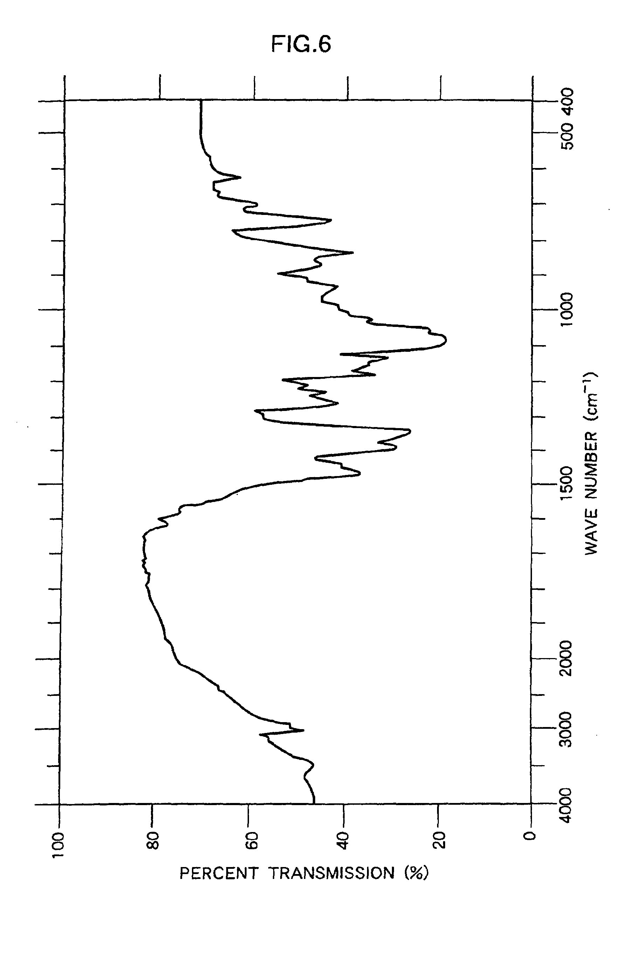

The IR spectrum of the compound obtained is shown in Fig. 6.

### Example 7

### Polymethine compound [synthesis of specific compound (51) ]

To 14 ml of acetic anhydride were added 1.71 g of the indolylethylene compound of general formula (2) (R₁ = R₃ = ethyl; R₂ = R₄= phenyl; R₅ = R₆ = hydrogen atom) , 0.77 g of the dianil compound of general formula (4) (L = ethylene; X = Cl) and 1.16 g of potassium borofluoride, and the mixture was stirred at 95∼100°C for 2.0 hours. After cooling, the reaction mixture was poured into 150 ml of water. The resulting precipitate was recovered by filtration, rinsed with water, dried and recrystallized from methanol to give 1.95 g of specific compound (51).

The elemental analysis, melting point, maximum absorption wavelength (λmax) and gram-absorption coefficient (εg) of this compound were as follows. Elemental analysis (C₇₅H₆₄BClF₄N₄) : MW = 1143.6

| | C | H | N |
|---|---|---|---|
| Calcd. (%) | 78.77 | 5.64 | 4.90 |
| Found (%) | 78.71 | 5.66 | 4.87 |

Melting point (°C): 187∼192°C
λmax:1034 nm (in diacetone alcohol)
εg : 1.08×10⁵ ml/g·cm

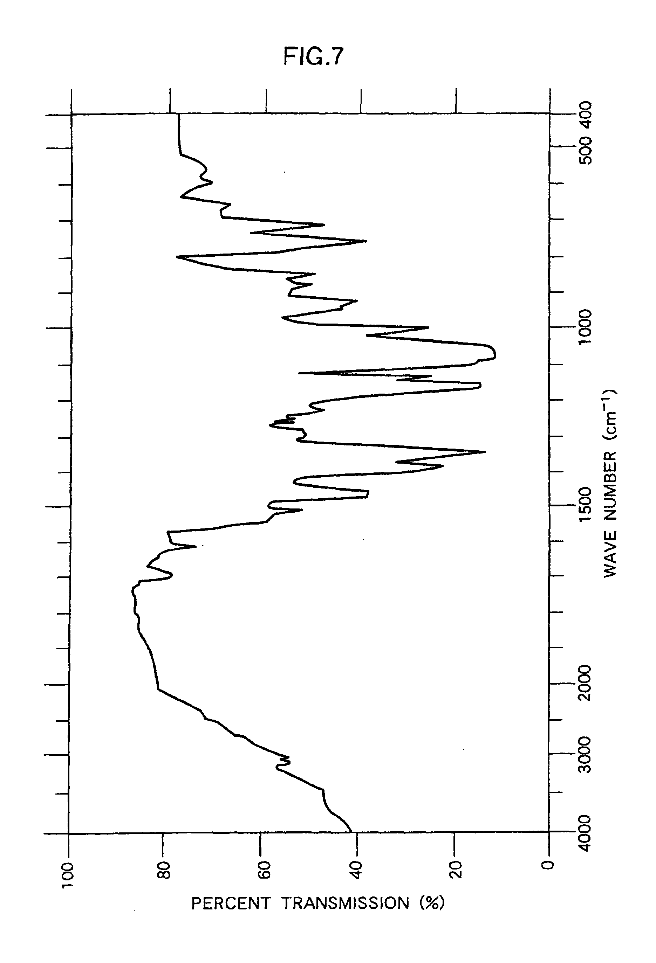

The IR spectrum of the compound obtained is shown in Fig. 7.

### [Maximum absorption wavelength]

The maximum absorption wavelength (λmax) value of each polymethine compound of the invention in diacetone alcohol is compared with that of Compound A which is a known compound, as follows.

**Table 1**

| | λmax |
|---|---|
| Specific compound (1) | 1007 nm |
| Specific compound (2) | 1007 nm |
| Specific compound (17) | 976 nm |
| Specific compound (18) | 975 nm |
| Specific compound (22) | 989 nm |
| Specific compound (28) | 985 nm |
| Specific compound (51) | 1034 nm |
| Compound A | 796 nm |

### Example 8

### Production of near-infrared absorbing material

A sample of a near-infrared absorbing material was produced by coating a polyethylene terephthalate (PET) film having an average thickness of 5 µm with a solution containing 10 g of the binder Delpet 80 N (product of Asahi Kasei Kogyo; acrylic resin) and 0.2 g of specific compound (1) in 90 g of toluene/methyl ethyl ketone (1/1) in a dry film thickness of about 5 µm using a wire bar.

A semiconductor-excited YAG laser with a wavelength of 1064 nm was disposed so that the laser beam diameter on the surface of the above sample would be 100 µm. The laser power reaching the surface was adjusted to 2 W and the sample was irradiated with single pulses at a pulse width of 20 µs. Observation of the irradiated sample under the light microscope revealed formation of through-holes with a diameter of about 100 µm.

### Examples 9∼18

### Production of near-infrared absorbing material

Using 0.2 g each of the specific compounds mentioned below in Table 2 in lieu of 0.2 g of specific compound (1), samples of near-infrared absorbing material were produced in otherwise the same manner as in Example 8. These samples were subjected to the same YAG laser irradiation test as in Example 8. As a result, formation of through-holes with a diameter of about 100 µm could be invariably confirmed in Examples 9∼18.

**Table 2**

| | Specific compound used |
|---|---|
| Example 9 | Specific compound (2) |
| Example 10 | Specific compound (17) |
| Example 11 | Specific compound (18) |
| Example 12 | Specific compound (22) |
| Example 13 | Specific compound (28) |
| Example 14 | Specific compound (30) |
| Example 15 | Specific compound (33) |
| Example 16 | Specific compound (36) |
| Example 17 | Specific compound (42) |
| Example 18 | Specific compound (51) |

### Example 19

### Fabrication of original plate for direct printing plate making

### (Formation of an undercoat layer)

On a 175 µm-thickpolyethylene terephthalate film, a gelatin primer layer was constructed in a dry thickness of 0.2 µm.

### (Formation of a photothermal conversion layer)

On the gelatin-undercoated polyethylene terephthalate film, a coating dope according to the following recipe was coated in a dry film thickness of 2 µm to provide a photothermal conversion layer.

| Amount in parts by weight | |
|---|---|
| Specific compound (1) | 0.1 |
| Crisvon 3006 LV | 5.0 |
| (Polyurethane, product of Dainippon Ink Chemical) | |
| Solsperse S27000 (product of ICI) | 0.4 |
| Nitrocellulose (n-propanol content 30%) | 4.2 |
| Xylylenediamine (1 mole) - glycidyl methacrylate (4 moles) adduct | 2.0 |
| Ethyl Michler's ketone | 0.2 |
| Tetrahydrofuran | 90 |
| (Formation of a silicone rubber layer) | |

A coating dope according to the following recipe was coated in a dry thickness of 2 µm on top of said photothermal conversion layer to provide a silicone rubber layer.

| Amount in parts by weight | |
|---|---|
| α,ω-Divinylpolydimethylsiloxane | 9.0 |
| (degree of polymerization ca 700) | |
| (CH₃)₃-Si-O-(SiH(CH₃)-O)₈-Si(CH₃)₃ | 0.6 |
| Polydimethylsiloxane | 0.5 |
| (degree of polymerization ca 8000) | |
| Olefin-chloroplatinic acid | 0.08 |
| Inhibitor HC≡C-C(CH₃)₂-O-Si(CH₃)₃ | 0.07 |
| Isopar G (product of Esso Chemical) | 55 |

The original plate obtained as above was written-in with a semiconductor-excited YAG laser (wavelength 1064 nm) at a beam diameter of 100 µm and a recording energy of 0.75 J/cm². As a result, a silicone image with a sharp edge could be obtained. Examples 20∼31

### Fabrication of original plate for direct printing plate making

Using 0.1 weight part each of the specific compounds mentioned below in Table 3 in lieu of 0.1 weight part of the specific compound (1) used in Example 19, the procedure of Example 19 was otherwise repeated to fabricate a printing original plate. These original plates were written-in with a YAG laser in the same manner as in Example 19. As a result, a silicone image with a sharp edge could be invariably obtained in Examples 20∼31.

**Table 3**

| | Specific compound used |
|---|---|
| Example 20 | Specific compound (2) |
| Example 21 | Specific compound (5) |
| Example 22 | Specific compound (11) |
| Example 23 | Specific compound (17) |
| Example 24 | Specific compound (18) |
| Example 25 | Specific compound (22) |
| Example 26 | Specific compound (25) |
| Example 27 | Specific compound (28) |
| Example 28 | Specific compound (29) |
| Example 29 | Specific compound (34) |
| Example 30 | Specific compound (38) |
| Example 31 | Specific compound (51) |

### Comparative Example 1

Except that 0.2 g of the polymethine compound (Compound A) described in JP Kokai H1-153753 and having the chemical formula shown below was used in lieu of 0.2 g of specific compound (1), a sample of near-infrared absorbing material was prepared by wire-bar coating in a dry thickness of about 5 µm in the same manner as in Example 8. A semiconductor-excited YAG laser with a wavelength of 1064 nm was disposed so that the beam diameter on the surface of said sample would be 100 µm. The laser power reaching the surface was adjusted to 2 W and the sample was irradiated with single pulses at a pulse width of 20 µs. Observation of the irradiated sample under the light microscope showed that no through-holes could be formed at the laser power of 2 W.

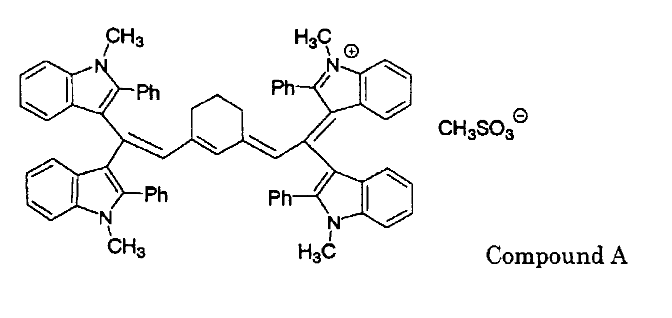

### INDUSTRIAL APPLICABILITY

The polymethine compound of general formula (1) absorbs little in the visible region of the spectrum and shows an exceptionally high sensitivity to a YAG laser having an emission wavelength of 900∼1100 nm, as well as good light stability, high durability, good solubility in various solvents and high compatibility with various resins so that it is a compound of great use as a near-infrared absorbing material. Moreover, because of its characteristics mentioned above, this polymethine compound can be easily made into a coating solution to give a uniform photothermal conversion layer so that it is particularly suitable for the fabrication of original plate for direct printing plate making compatible with a YAG laser.

## Claims

1. A polymethine compound of the following general formula (1): 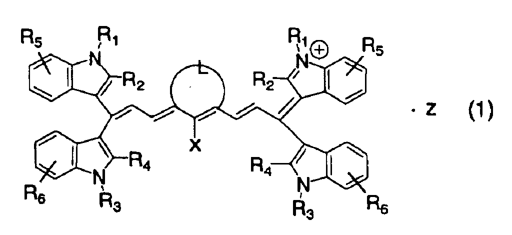 (wherein R₁ and R₃ each independently represents an unsubstituted or substituted alkyl group, a cycloalkyl group of 5∼7 carbon atoms or an unsubstituted or substituted aryl group; R₂ and R₄ each independently represents an unsubstituted or substituted alkyl group or an unsubstituted or substituted aryl group; R₅ and R₆ each independently represents a hydrogen atom, an unsubstituted or substituted alkyl group or an unsubstituted or substituted alkoxy group; L represents an unsubstituted or substituted alkylene group of 2∼4 carbon atoms which is necessary for formation of a cyclic structure; X represents a hydrogen atom, a halogen atom or a substituted amino group; Z represents a charge-neutralizing ion)

2. A polymethine compound according to Claim 1 wherein R₁ and R₃ each represents an alkyl group of 1∼18 carbon atoms, an alkoxyalkyl group containing a total of 2∼8 carbon atoms, a sulfoalkyl group of 1∼18 carbon atoms, a carboxyalkyl group containing a total of 2∼8 carbon atoms, a cyclohexyl group, a phenyl group or a phenyl group having an alkyl group of 1∼4 carbon atoms or an alkoxy group of 1∼4 carbon atoms.

3. A polymethine compound according to Claim 1 wherein R₂ and R₄ each represents an alkyl group of 1∼8 carbon atoms, an alkoxyalkyl group containing a total of 2∼8 carbon atoms, a phenyl group, or a phenyl group having an alkyl group of 1∼4 carbon atoms or an alkoxy group of 1∼4 carbon atoms.

4. A polymethine compound according to Claim 1 wherein R₅ and R₆ each represents a hydrogen atom, an alkyl group of 1∼8 carbon atoms, an alkoxy group of 1∼8 carbon atoms, an alkoxyalkyl group containing a total of 2∼8 carbon atoms, or an alkoxyalkoxy group containing a total of 2∼8 carbon atoms.

5. A polymethine compound according to Claim 1 wherein L represents an unsubstituted alkylene group of 2∼4 carbon atoms.

6. A polymethine compound according to Claim 1 wherein X represents H, Cl, Br or diphenylamino.

7. A polymethine compound according to Claim 1 wherein Z represents Cl⁻, Br⁻, I⁻, ClO₄⁻, BF₄⁻, CF₃CO₂⁻, PF₆⁻, SbF₆⁻, CH₃SO₃⁻, p-toluenesulfonate, Na⁺, K⁺ or triethylammonium ion.

8. A process for producing a polymethine compound of Claim 1 which comprises subjecting an indolylethylene compound of the following general formula (2) and a diformyl compound of the following general formula (3) or a dianil compound of the following general formula (4) to condensation reaction in the presence of an alkali metal salt by using a dehydrative organic acid. 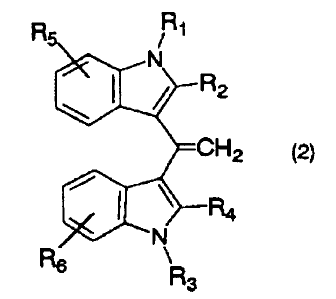 (wherein R₁ and R₃ each independently represents an unsubstituted or substituted alkyl group, a cycloalkyl group of 5∼7 carbon atoms, or an unsubstituted or substituted aryl group; R₂ and R₄ each independently represents an unsubstituted or substituted alkyl group or an unsubstituted or substituted aryl group; R₅ and R₆ each independently represents a hydrogen atom, an unsubstituted or substituted alkyl group, or an unsubstituted or substituted alkoxy group) 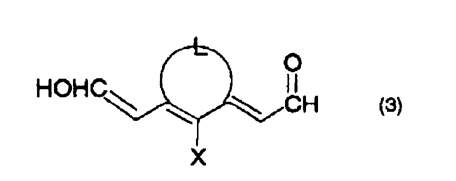 (wherein X represents a hydrogen atom, a halogen atom or a substituted amino group; L represents an unsubstituted or substituted alkylene group of 2∼4 carbon atoms which is necessary to form a cyclic structure) 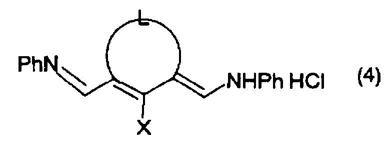 (wherein X and L have the same meanings as above)

9. A near-infrared absorbing material comprising the polymethine compound defined in Claim 1.

10. An original plate for direct printing plate making comprising a substrate and as disposed thereon a photothermal conversion layer containing the polymethine compound defined in Claim 1.

11. A process for manufacturing a printing plate which comprises irradiating the original plate for direct printing plate making claimed in Claim 10 using a laser having an emission band of 900∼1100 nm as a light source.
